(19) **Europäisches Patentamt**
**European Patent Office**
**Office européen des brevets**

(11) **EP 4 376 473 A1**

(12) **EUROPEAN PATENT APPLICATION**
published in accordance with Art. 153(4) EPC

(43) Date of publication:
**29.05.2024 Bulletin 2024/22**

(21) Application number: **22855340.0**

(22) Date of filing: **05.08.2022**

(51) International Patent Classification (IPC):
**H04W 24/02** (2009.01)

(52) Cooperative Patent Classification (CPC):
**H04W 24/02**

(86) International application number:
**PCT/CN2022/110478**

(87) International publication number:
**WO 2023/016359 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.08.2021 CN 202110919675**

(71) Applicant: **Huawei Technologies Co., Ltd.**
**Shenzhen, Guangdong 518129 (CN)**

(72) Inventors:
• **HOU, Hailong**
**Shenzhen, Guangdong 518129 (CN)**
• **JIN, Zhe**
**Shenzhen, Guangdong 518129 (CN)**
• **LUO, Zhihu**
**Shenzhen, Guangdong 518129 (CN)**
• **QU, Weilin**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND COMMUNICATION APPARATUS**

(57) This application provides a communication method and a communication apparatus. A terminal device determines a first physical resource, and receives a first PBCH and a first PBCH DMRS on the first physical resource. Correspondingly, a network device maps the first PBCH to the first physical resource, and sends the first PBCH, where the first physical resource is a physical resource occupied by the first PBCH and the first PBCH DMRS in a first SSB, and the first SSB occupies four symbols in time domain and occupies X subcarriers in frequency domain, where X is a positive integer greater than 127 and less than 240. In this application, a problem of narrowband PBCH transmission can be resolved, and transmission performance of a narrowband PBCH can be improved.

FIG. 9

**Description**

This application claims priority to Chinese Patent Application No. 202110919675.6, filed with the China National Intellectual Property Administration on August 11, 2021 and entitled "COMMUNICATION METHOD AND COMMUNICATION APPARATUS", which is incorporated herein by reference in its entirety.

**TECHNICAL FIELD**

This application relates to the communication field, and in particular, to a communication method and a communication apparatus.

**BACKGROUND**

In a wireless communication system, a terminal device may receive a synchronization signal and physical broadcast channel block (synchronization signal and physical broadcast channel block, SSB) to synchronize with a network device, obtain system information, and so on. In some dedicated network scenarios or private networks such as a railway mobile radio network (future railway mobile communication system, FRMCS), a spectrum is narrow, and narrowband transmission needs to be supported. However, an existing PBCH usually occupies a large frequency bandwidth, and cannot be transmitted on a narrowband spectrum. Therefore, how to receive and send a PBCH in a narrowband system such as a dedicated network is an urgent problem to be resolved.

**SUMMARY**

Embodiments of this application provide a communication method and a communication apparatus, to resolve a problem of narrowband PBCH transmission, and improve transmission performance of a PBCH in a narrowband system.

According to a first aspect, a communication method is provided. The method may be performed by a terminal device or a chip disposed in the terminal device. The method includes: determining a first physical resource, where the first physical resource is a physical resource to which a first physical broadcast channel PBCH and a first PBCH DMRS are mapped; and receiving the first PBCH on the first physical resource, where the first PBCH is a PBCH in a first SSB, and the first SSB occupies four symbols in time domain and occupies X subcarriers in frequency domain, where X is a positive integer less than 240. In this solution, the first SSB occupies less than 240 subcarriers in frequency domain. In this way, PBCH transmission in a narrowband system can be enabled.

With reference to the first aspect, after the receiving the first PBCH, the method further includes: obtaining system information carried by the first PBCH, where a quantity of bits of the system information is less than 32. In the narrowband system, physical resources for transmitting a PBCH are reduced, and consequently transmission performance of the PBCH is reduced, and access of the terminal device to a cell is affected. Therefore, a payload of the first PBCH is less than a payload size of 32 bits of an existing PBCH, so that a bit rate can be reduced, thereby helping improve performance of the first PBCH.

According to a second aspect, a communication method is provided. The method may be performed by a network device or a chip disposed in the network device. The network device may be a radio access network device, or may be a network unit that implements a corresponding function of the radio access network device. The method includes: mapping a first PBCH and a first PBCH DMRS to a first physical resource; and sending the first PBCH and the first PBCH DMRS, where the first PBCH is a PBCH in a first SSB, and the first SSB occupies four symbols in time domain and occupies X subcarriers in frequency domain, where X is a positive integer less than 240. In this solution, the first SSB occupies less than 240 subcarriers in frequency domain. In this way, SSB transmission in a narrowband system can be enabled.

With reference to the second aspect, before the mapping a first PBCH to a first physical resource, the method further includes: generating system information carried by the first PBCH, where a quantity of bits of the system information is less than 32.

With reference to the first aspect and the second aspect, the options are as follows:
Optionally, X is greater than 127. A quantity of subcarriers occupied by an existing PSS or SSS in frequency domain is 127. Therefore, an existing synchronization sequence may be used, to ensure synchronization performance. In particular, for terminal devices having narrowband access and broadband access, a same synchronization detection algorithm is used, to reduce implementation complexity.

Optionally, X is 180. When a subcarrier spacing is 15 kHz, a frequency domain bandwidth of the first SSB is 2.7 MHz. This solution is applicable to a system bandwidth not greater than 3.6 MHz. If the system bandwidth is 3 MHz, 0.3 MHz may be further reserved on two sides of the first SSB as a guard band. In this case, the guard band accounts for 10% of the system bandwidth, and resource utilization is high.

Optionally, X is 216. When a subcarrier spacing is 15 kHz, a frequency domain bandwidth of the first SSB is 3.24 MHz. This solution is applicable to a system bandwidth not greater than 3.6 MHz. If the system bandwidth is 3.6 MHz, 0.36 MHz may be further reserved on two sides of the first SSB as a guard band. In this case, the guard band accounts for 10% of the system bandwidth, and resource utilization is high.

Optionally, X is 150. When a subcarrier spacing is 30 kHz, a frequency domain bandwidth of the first SSB is 4.5 MHz, and is applicable to a system bandwidth not greater than 7.2 MHz. If the system bandwidth is 5 MHz, 0.5 MHz may be further reserved on two sides of the first SSB as a guard band. In this case, the guard band accounts for 10% of the system bandwidth, and resource utilization is high.

Optionally, in the first SSB, the first physical resource includes all REs in a $2^{nd}$ symbol and a $4^{th}$ symbol, and further includes Y REs in a $3^{rd}$ symbol, where Y is a positive integer less than 96.

Optionally, the first physical resource includes only all REs in a $2^{nd}$ symbol and a $4^{th}$ symbol, that is, the first physical resource does not include REs in a $3^{rd}$ symbol.

According to a third aspect, a communication method is provided. The method may be performed by a terminal device or a chip disposed in the terminal device. The method includes: determining a first physical resource based on a first frequency domain pattern or a first resource element RE pattern, where the first frequency domain pattern or the first RE pattern is a part of patterns included in a second frequency domain pattern or in a second RE pattern; and receiving a first PBCH, where the first PBCH is located in the first physical resource. In this solution, two patterns are introduced. The first frequency domain pattern or the first RE pattern is used for a narrowband spectrum, and the second frequency domain pattern or the second RE pattern is used for a broadband spectrum. Because the first frequency domain pattern or the first RE pattern is a part of the second frequency domain pattern or the second RE pattern, that is, a plurality of different patterns are not introduced, a system may adaptively configure an appropriate pattern based on a system bandwidth, and compatibility is good, in particular, for a terminal device having narrowband access and broadband access.

With reference to the third aspect, after the receiving the first PBCH, the method further includes: obtaining system information carried by the first PBCH, where a quantity of bits of the system information is less than 32. When a payload of the first PBCH decreases, a bit rate may be reduced, thereby helping improve performance of the first PBCH.

With reference to the third aspect, after the receiving the first PBCH, the method further includes: determining a second physical resource, where the second physical resource and the first physical resource are located in different time domain resources; and receiving a second PBCH, where the second PBCH is located in the second physical resource. Further, the method further includes: obtaining the system information based on the first PBCH and the second PBCH. The terminal device performs combination processing on the first PBCH and the second PBCH. In this way, transmission performance of the system information can be improved, and a probability of successfully accessing a cell can be increased.

According to a fourth aspect, a communication method is provided. The method may be performed by a network device or a chip disposed in the network device. The network device may be a radio access network device, or may be a network unit that implements a corresponding function of the radio access network device. The method includes: mapping a first PBCH to a first physical resource based on a first frequency domain pattern or a first resource element RE pattern, where the first frequency domain pattern or the first RE pattern is a part of patterns included in a second frequency domain pattern or in a second RE pattern; and sending the first PBCH, where the first PBCH is located in the first physical resource. According to this solution, the network device may adaptively configure an appropriate pattern based on a system bandwidth, and compatibility is good.

With reference to the fourth aspect, before the mapping a first PBCH to a first physical resource, the method further includes: generating system information carried by the first PBCH, where a quantity of bits of the system information is less than 32.

With reference to the fourth aspect, after the sending the first PBCH, the method further includes: mapping a second PBCH to a second physical resource, where the second physical resource and the first physical resource are located in different time domain resources; and sending the second PBCH, where the second PBCH is located in the second physical resource.

With reference to the third aspect and the fourth aspect, the options are as follows:

Optionally, the first frequency domain pattern or the first RE pattern is a frequency domain resource pattern or a resource element pattern in a first resource area, the second frequency domain pattern or the second RE pattern is a frequency domain resource pattern or a resource element pattern in a second resource area, the first resource area is a part of the second resource area, and the first frequency domain pattern or the first RE pattern is a pattern of the second frequency domain pattern or the second RE pattern in the first resource area.

Optionally, the second resource area occupies four consecutive symbols in time domain and occupies 240 consecutive subcarriers in frequency domain; and the first resource area occupies the four consecutive symbols in time domain and occupies X subcarriers in the 240 consecutive subcarriers in frequency domain, where X is a positive integer less than 240.

Optionally, X is 144, 150, 180, 192, or 216.

Optionally, REs in the second RE pattern include all 240 REs in a $2^{nd}$ symbol in the four symbols, all 240 REs in a $4^{th}$ symbol in the four symbols, and 96 REs in a $3^{rd}$ symbol in the four symbols, where the 96 REs are located in the first 48 subcarriers and the last 48 subcarriers in the 240 subcarriers in frequency domain.

Optionally, REs in the first RE pattern include the middle X REs, the first X REs, or the last X REs in a $2^{nd}$ symbol in the four symbols; the middle X REs, the first X REs, or the last X REs in a $4^{th}$ symbol in the four symbols; and the middle Y REs, the first Y REs, or the last Y REs in the 96 REs in a $3^{rd}$ symbol in the four symbols, where Y is a positive integer less than 96.

Optionally, coded bits of the first PBCH are determined based on the first frequency domain pattern.

Optionally, coded bits of the first PBCH and coded bits of the second PBCH are determined based on the second frequency domain pattern; and the first PBCH is sequentially mapped in ascending order of subcarrier indexes, and the second PBCH is sequentially mapped in descending order of subcarrier indexes. In this way, coded bits transmitted on the first PBCH and the second PBCH are different. UE combines the first PBCH and the second PBCH, to obtain a larger coding gain. In this way, transmission performance of the system information is improved, and a probability that the UE accesses a cell is increased.

According to a fifth aspect, a communication method is provided. The method may be performed by a terminal device or a chip disposed in the terminal device. The method includes: receiving a first PBCH; and obtaining system information carried by the first PBCH, where a quantity of bits of the system information is less than 32. A payload of the first PBCH is less than a payload size of 32 bits of an existing PBCH, so that a bit rate can be reduced, thereby helping improve performance of the first PBCH. In particular, in a narrowband system, physical resources for transmitting a PBCH are reduced, and a quantity of the system information bits is reduced, so that transmission performance of the PBCH can be improved.

According to a sixth aspect, a communication method is provided. The method may be performed by a network device or a chip disposed in the network device. The network device may be a radio access network device, or may be a network unit that implements a corresponding function of the radio access network device. The method includes: generating system information carried by a first PBCH, where a quantity of bits of the system information is less than 32; and sending the first PBCH.

With reference to the fifth aspect and the sixth aspect, the options are as follows:
Optionally, the system information does not include at least one piece of the following information: "subCarrierSpacing-Common" information, "dmrs-TypeA-Position" information, or "pdcch-ConfigSIB1" information.

Optionally, a quantity of bits of "pdcch-ConfigSIB1" information included in the system information is less than 8.

Optionally, a quantity of bits of physical layer information included in the system information is less than 8.

Optionally, the first PBCH is a PBCH in a first SSB, and the first SSB occupies four symbols in time domain and occupies X subcarriers in frequency domain, where X is a positive integer less than 240. The first SSB occupies less than 240 subcarriers in frequency domain. In this way, SSB transmission in a narrowband system can be enabled.

According to a seventh aspect, a communication apparatus is provided, and includes each module or unit configured to perform the method according to any possible implementation of the first aspect, the third aspect, or the fifth aspect.

According to an eighth aspect, a communication apparatus is provided, and includes each module or unit configured to perform the method according to any possible implementation of the second aspect, the fourth aspect, or the sixth aspect.

According to a ninth aspect, a communication apparatus is provided, and includes a processor. The processor is coupled to a memory, and may be configured to execute instructions in the memory, so that the communication apparatus performs the method according to any possible implementation of the first aspect, the third aspect, or the fifth aspect. Optionally, the communication apparatus further includes the memory. Optionally, the communication apparatus may further include a transceiver and/or an antenna. Optionally, the communication apparatus may be a terminal device or a chip disposed in the terminal device.

According to a tenth aspect, a communication apparatus is provided, and includes a processor. The processor is coupled to a memory, and may be configured to execute instructions in the memory, so that the communication apparatus performs the method according to any possible implementation of the second aspect, the fourth aspect, or the sixth aspect. Optionally, the communication apparatus further includes the memory. Optionally, the communication apparatus may further include a transceiver and/or an antenna. Optionally, the communication apparatus may be a network device or a chip disposed in the network device.

According to an eleventh aspect, a terminal device is provided, and can implement the method according to any possible implementation of the first aspect, the third aspect, or the fifth aspect. Optionally, the terminal device may be a chip (for example, a communication chip) or user equipment, and may implement the foregoing method by using software or hardware, or by hardware executing corresponding software.

In a possible implementation, the terminal device includes a processor and a memory. The processor is configured to support the terminal device in performing a corresponding function according to any possible implementation of the first aspect, the third aspect, or the fifth aspect. The memory is configured to store instructions and/or data. Optionally, the terminal further includes a radio frequency circuit and an antenna.

In another possible implementation, the terminal device includes a processing apparatus and a transceiver unit. The processing apparatus includes a processor and a memory, and is configured to perform an action that is implemented inside the terminal device according to any possible implementation of the first aspect, the third aspect, or the fifth aspect. The transceiver unit includes a radio frequency circuit and an antenna, and is configured to perform an action that is sent by the terminal device to the outside or received by the terminal device from the outside.

In still another possible implementation, the terminal device includes a processor and a transceiver. The processor is configured to support the terminal device in performing the method according to any possible implementation of the first aspect, the third aspect, or the fifth aspect. When the terminal device is a chip, the transceiver may be an input/output unit, for example, an input/output circuit or an input/output interface.

In yet another possible implementation, the terminal device may include a unit module that performs a corresponding action according to any possible implementation of the first aspect, the third aspect, or the fifth aspect.

According to a twelfth aspect, a network device is provided, and can implement the method according to any possible implementation of the second aspect, the fourth aspect, or the sixth aspect. Optionally, the network device may be a chip (for example, a baseband chip or a communication chip) or a base station device, and may implement the foregoing method by using software or hardware, or by hardware executing corresponding software.

In a possible implementation, the network device includes a processor and a memory. The processor is configured to support the network device in performing the method according to any possible implementation of the second aspect, the fourth aspect, or the sixth aspect. The memory is configured to store instructions and/or data. Optionally, the network device further includes a radio frequency unit and an antenna.

In another possible implementation, the network device includes a baseband unit and a transceiver unit. The baseband unit is configured to perform an action that is implemented inside the network device according to any possible implementation of the second aspect, the fourth aspect, or the sixth aspect. The transceiver unit is configured to perform an action that is sent by the network device to the outside or received by the network device from the outside.

In still another possible implementation, the network device includes a processor and a transceiver. The processor is configured to support the network device in performing the method according to any possible implementation of the second aspect, the fourth aspect, or the sixth aspect. When the network device is a chip, the transceiver may be an input/output unit, for example, an input/output circuit or an input/output interface.

In yet another possible implementation, the network device may include a unit module that performs a corresponding action according to any possible implementation of the second aspect, the fourth aspect, or the sixth aspect.

According to a thirteenth aspect, a communication unit is provided. The communication unit may implement some functions of a network device.

In a possible implementation, the communication unit is a radio frequency unit. The radio frequency unit includes a radio frequency function and/or a lower layer function in a physical layer. The radio frequency unit may include a unit module that performs a corresponding action according to any possible implementation of the second aspect, the fourth aspect, or the sixth aspect.

In another possible implementation, the communication unit is a distributed unit. The distributed unit includes functions of an RLC layer, a MAC layer, and/or a higher layer in the physical layer. The distributed unit may include a unit module that performs a corresponding action according to any possible implementation of the second aspect, the fourth aspect, or the sixth aspect.

In still another possible implementation, the communication unit is a central unit. The central unit includes functions of PDCP and RRC. The central unit may include a unit module that performs a corresponding action according to any possible implementation of the second aspect, the fourth aspect, or the sixth aspect.

According to a fourteenth aspect, a computer-readable storage medium is provided. The computer-readable storage medium stores a computer program or instructions. When the computer program or the instructions are run, the method according to any possible implementation of the first aspect, the third aspect, or the fifth aspect is implemented.

According to a fifteenth aspect, a computer-readable storage medium is provided. The computer-readable storage medium stores a computer program or instructions. When the computer program or the instructions are run, the method according to any possible implementation of the second aspect, the fourth aspect, or the sixth aspect is implemented.

According to a sixteenth aspect, a processor is provided, including an input circuit, an output circuit, and a processing circuit. The processing circuit is configured to: receive a signal through the input circuit, and transmit a signal through the output circuit, to enable the processor to perform the method according to any one of the foregoing aspects or the possible implementations of the aspect. Optionally, the processor is a chip, the input circuit is an input pin, the output circuit is an output pin, and the processing circuit is a transistor, a gate circuit, a trigger, and/or various logic circuits.

According to a seventeenth aspect, a computer program product is provided. The computer program product includes a computer program (which may also be referred to as code or instructions). When the computer program is run, a computer is enabled to perform the method according to any possible implementation of the first aspect, the third aspect, or the fifth aspect.

According to an eighteenth aspect, a computer program product is provided. The computer program product includes a computer program (which may also be referred to as code or instructions). When the computer program is run, a computer is enabled to perform the method according to any possible implementation of the second aspect, the fourth aspect, or the sixth aspect.

**BRIEF DESCRIPTION OF DRAWINGS**

FIG. 1 is a schematic diagram of a communication system according to this application;
FIG. 2 is a schematic diagram of a structure of an existing SSB;
FIG. 3A and FIG. 3B are schematic diagrams of a synchronization signal burst set;
FIG. 4A is a schematic diagram of a structure of an SSB according to this application;
FIG. 4B is another schematic diagram of a structure of an SSB according to this application;
FIG. 4C is still another schematic diagram of a structure of an SSB according to this application;
FIG. 4D is yet another schematic diagram of a structure of an SSB according to this application;
FIG. 5A is a schematic diagram of resource mapping of two SSBs according to this application;
FIG. 5B is another schematic diagram of resource mapping of two SSBs according to this application;
FIG. 5C is still another schematic diagram of resource mapping of two SSBs according to this application;
FIG. 6 is a flowchart of a communication method according to this application;
FIG. 7 is a flowchart of PBCH processing according to this application;
FIG. 8A is a schematic diagram of puncturing a PBCH according to this application;
FIG. 8B is another schematic diagram of puncturing a PBCH according to this application;
FIG. 8C is still another schematic diagram of puncturing a PBCH according to this application;
FIG. 9 is another flowchart of a communication method according to this application;
FIG. 10 is a schematic diagram of a structure of a communication apparatus according to this application;
FIG. 11 is a schematic diagram of communication between communication apparatuses according to this application;
FIG. 12 is a schematic diagram of a structure of a network device according to this application;
FIG. 13 is a schematic diagram of a structure of a terminal device according to this application; and
FIG. 14 is a schematic diagram of a structure of a communication apparatus according to this application.

**DESCRIPTION OF EMBODIMENTS**

The following describes technical solutions of this application with reference to accompanying drawings.

A method and an apparatus provided in embodiments of this application may be applied to or used in various communication systems, for example, a 5th generation (5th generation, 5G) system, a new radio (new radio, NR) system, a long term evolution (long term evolution, LTE) system, an internet of things (internet of things, IoT) system, a wireless-fidelity (wireless-fidelity, Wi-Fi) system, and a wireless communication system related to the 3rd generation partnership project (3rd generation partnership project, 3GPP), or another wireless communication system that may appear in the future, or the like.

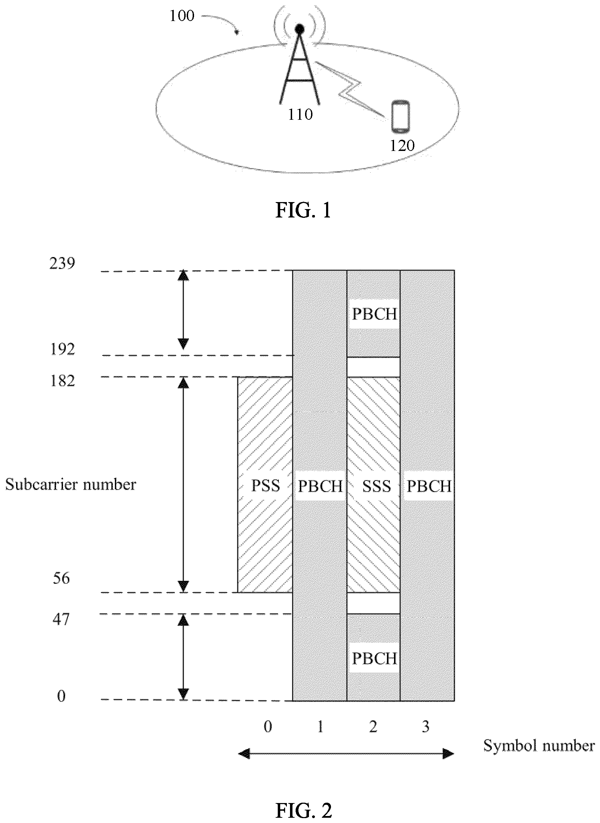

FIG. 1 is a schematic diagram of a communication system applicable to this application. The system 100 includes at least one network device, for example, a network device 110 shown in FIG. 1. The system 100 may further include at least one terminal device, for example, a terminal device 120 shown in FIG. 1. The network device 110 and the terminal device 120 may communicate with each other through a radio link, to exchange information. It may be understood that the network device and the terminal device may also be referred to as communication devices.

The network device is a network side device that has a wireless transceiver function. The network device may be an apparatus that provides a wireless communication function for the terminal device in a radio access network (radio access network, RAN), and is referred to as a RAN device. For example, the network device may be a base station (base station), an evolved NodeB (evolved NodeB, eNodeB), a next generation NodeB (next generation NodeB, gNB) in a 5G mobile communication system, a base station that is subsequently evolved from 3GPP, a transmission reception point (transmission reception point, TRP), and an access node, a wireless relay node, a wireless backhaul node, and the like in the Wi-Fi system. In communication systems using different radio access technologies (radio access technologies, RATs), names of devices having a base station function may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, a function of the CU may be implemented by one entity or different entities. For example, the function of the CU may be further divided, that is, a control plane and a user plane are separated, and is implemented by using different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. In this way, a plurality of network functional entities may be for implementing some functions of a radio access network device. These network functional entities may be network elements in hardware devices, software functions running on dedicated hardware, or virtualized functions instantiated on a platform (for example, a cloud platform). For example, in a vehicle-to-everything (vehicle-to-everything, V2X) technology, an access network device may be a road side unit (road side unit, RSU). A plurality of access network devices in the communication system may be base stations of a same type, or may be base stations of different types. The base station may communicate with the terminal device, or may communicate with the terminal device through a relay station. In embodiments of this application, an apparatus configured to implement a function of the network device may be a network device, or may be an apparatus that can support the network device in implementing the function, for example, a chip system, or a combined component or a component that can implement the function of the access network device. The apparatus may be installed in the network device. In embodiments of this application, the chip system may include a chip, or may include a chip and another discrete component. In embodiments of this application, the network device is used as an example to describe the technical solutions.

The terminal device is a user side device with a wireless transceiver function, and may be a fixed device, a mobile device, a handheld device (for example, a mobile phone), a wearable device, an in-vehicle device, or a wireless apparatus (for example, a communication module, a modem, or a chip system) built in the foregoing device. The terminal device is configured to connect a person, an object, a machine, and the like, and may be widely used in various scenarios, for example, cellular communication, device-to-device (device-to-device, D2D) communication, V2X communication, machine-to-machine/machine-type communication (machine-to-machine/machine-type communication, M2M/MTC) communication, an internet of things, virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city, an unmanned aerial vehicle, a robot, and the like. For example, the terminal device may be a handheld terminal in cellular communication, a communication device in D2D, an IoT device in MTC, surveillance cameras in the smart transportation and in the smart city, a communication device in the unmanned aerial vehicle, or the like. Sometimes, the terminal device may be referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be a terminal device, or may be an apparatus that can support the terminal device in implementing the function, for example, a chip system, or a combined component or a component that can implement the function of the terminal device. The apparatus may be installed in the terminal device. For ease of description, in this application, an example in which the terminal device is the UE is used for description.

For ease of understanding, some terms in this application are first described.

1. Resource (resource): A resource is a radio resource, including a time domain resource, a frequency domain resource, a code domain resource, or the like.

2. Resource element (resource element, RE): One RE corresponds to one physical resource (a physical resource). One RE is identified by (k, l), where k is a subcarrier index, and 1 is a symbol index. In other words, one RE corresponds to one time domain symbol in time domain (where the time domain symbol is referred to as a symbol for short in the following embodiments of this application) and one subcarrier in frequency domain. The RE is a resource element at a minimum granularity.

3. Resource block (resource block, RB): One RB includes $N_{sc}^{RB}$ consecutive subcarriers in frequency domain. $N_{sc}^{RB}$ is a positive integer. In a 5G system, $N_{sc}^{RB}$ is equal to 12, and may be another value when this application is applied to another system. In embodiments of this application, the RB is defined only from a perspective of a frequency domain resource, and is not related to a time domain resource.

4. Symbol (symbol): The symbol is short for a time domain symbol, and may also be referred to as an orthogonal frequency division multiplexing (orthogonal frequency division multiplexing, OFDM) symbol. It should be noted that the time domain symbol may alternatively be named in combination with another multiple access manner. This is not limited in embodiments of this application. For different subcarrier spacings, lengths of time domain symbols may vary.

5. Slot (slot): One slot includes N symbols, where N is a positive integer. For example, for a normal cyclic prefix (normal cyclic prefix, NCP), N is equal to 14; and for an extended CP (extended cyclic prefix, ECP), N is equal to 12. When the solutions in embodiments of this application are applied to another system, N may alternatively be another value. For different subcarrier spacings, a length of one slot may vary. This is not limited in embodiments of this application. For example, when the subcarrier spacing is 15 kHz and a CP is an NCP, one slot is 1 ms (millisecond) and includes 14 symbols.

In a current 5G NR system, a terminal device may implement downlink synchronization, obtain a system message, and so on by receiving an SSB. A primary synchronization signal (primary synchronization signal, PSS), a secondary synchronization signal (secondary synchronization signal, SSS), and a physical broadcast channel (physical broadcast channel, PBCH) together form one SSB. As shown in Table 1 and FIG. 2, one SSB occupies four OFDM symbols (a symbol 0 to a symbol 3) in time domain and occupies 20 RBs in frequency domain, that is, 240 subcarriers. In the 20 RBs, subcarrier numbers are 0 to 239. A PSS is located in the middle 127 subcarriers of the symbol 0, and an SSS is located in the middle 127 subcarriers of the symbol 2. To protect the PSS and the SSS, guard subcarriers are reserved on two sides of the PSS and the SSS, and the guard subcarriers are not used to carry signals. In other words, a quantity of signals on the guard subcarriers is 0. As shown in FIG. 2, white areas on upper and lower sides of the SSS are guard subcarriers, which are respectively nine subcarriers and eight subcarriers; and white areas on upper and lower sides of the PSS are also guard subcarriers. A PBCH occupies all 240 subcarriers of the symbol 1 and the symbol 3 and occupies 96 subcarriers of the symbol 2. The 96 subcarriers are the first 48 subcarriers (with subcarrier numbers 0 to 47) and the last 48 subcarriers (with subcarrier numbers 192 to 239) in the all 240 subcarriers. In a broad sense, the PBCH occupies 576 REs in total. However, 144 REs in the 576 REs are used to transmit PBCH demodulation reference signals (demodulation reference signals, DMRSs). In other words, in a narrow sense, the PBCH actually occupies 432 REs in the 576 REs. In frequency domain, one of every four subcarriers is occupied by a PBCH DMRS, where $v = N_{\mathrm{ID}}^{\mathrm{cell}}$ mod 4 in Table 1, and $N_{\mathrm{ID}}^{\mathrm{cell}}$ is a physical layer cell identifier (Physical layer cell identifier, PCI). A bandwidth of the SSB is shown in Table 2. It should be noted that the subcarrier number (subcarrier number) is also referred to as a subcarrier index (subcarrier index), and a symbol number is also referred to as a symbol index.

**Table 1**

| Type | Symbol number | Subcarrier number |
|---|---|---|
| PSS | 0 | 56, 57, ..., 182 |
| SSS | 2 | 56, 57, ..., 182 |
| Set to 0 (set to 0) | 0 | 0, 1, ..., 55, 183, 184, ..., 239 |
| | 2 | 48, 49, ..., 55, 183, 184, ..., 191 |
| PBCH and PBCH DMRS | 1,3 | 0, 1, ..., 239 |
| | 2 | 0, 1, ..., 47, 192, 193, ..., 239 |
| PBCH DMRS | 1,3 | 0+v, 4+v, 8+v, ..., 236+v |
| | 2 | 0+v, 4+v, 8+v, ..., 44+v<br>192+v, 196+v, ..., 236+v |

**Table 2**

| Subcarrier spacing | Bandwidth of a PSS/SSS | Bandwidth of a PBCH |
|---|---|---|
| 15 kHz | 1.905 MHz | 3.6 MHz |
| 30 kHz | 3.81 MHz | 7.2 MHz |

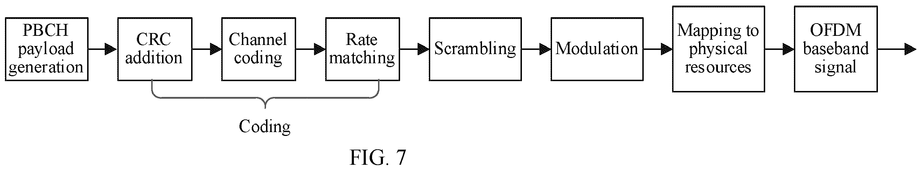

A processing process or a generation process of the PBCH includes procedures such as cyclic redundancy check (CRC, Cyclic Redundancy Check) addition, channel coding (channel coding), rate matching (rate matching), scrambling (scrambling), modulation (modulation), and mapping to physical resources (mapping to physical resources), as shown in FIG. 7. Rate matching means performing matching processing on a coded bit output through channel coding and a physical layer resource that is actually transmitted. Rate matching processing is related to a coding scheme. For example, polar coding (polar coding) is used for the PBCH, and rate matching of the polar coding generally includes sub-block interleaving (sub-block interleaving), bit selection (bit selection) and interleaving of coded bits (interleaving of coded bits). For an existing PBCH, a length E of a bit sequence output through rate matching is 864. A quantity of REs for transmitting the PBCH is 432, a modulation scheme of the PBCH is QPSK (quadrature phase shift keying), and modulation efficiency of the QPSK is 2. Therefore, a quantity of coded bits of one PBCH after rate matching is 432 * 2 = 864. Mapping to physical resources means mapping modulated modulation symbols to physical resources. Specifically, for the PBCH, modulation symbols are sequentially mapped to 432 REs other than REs occupied by the PBCH DMRS. Specifically, mapping is performed in a sequence in which a frequency domain subcarrier index of the RE increases first, and then a time domain symbol index of the RE increases. In other words, mapping is first performed in a frequency domain dimension, then mapping is performed in a time domain dimension, and mapping is performed in a sequence in which an index value in each dimension increases.

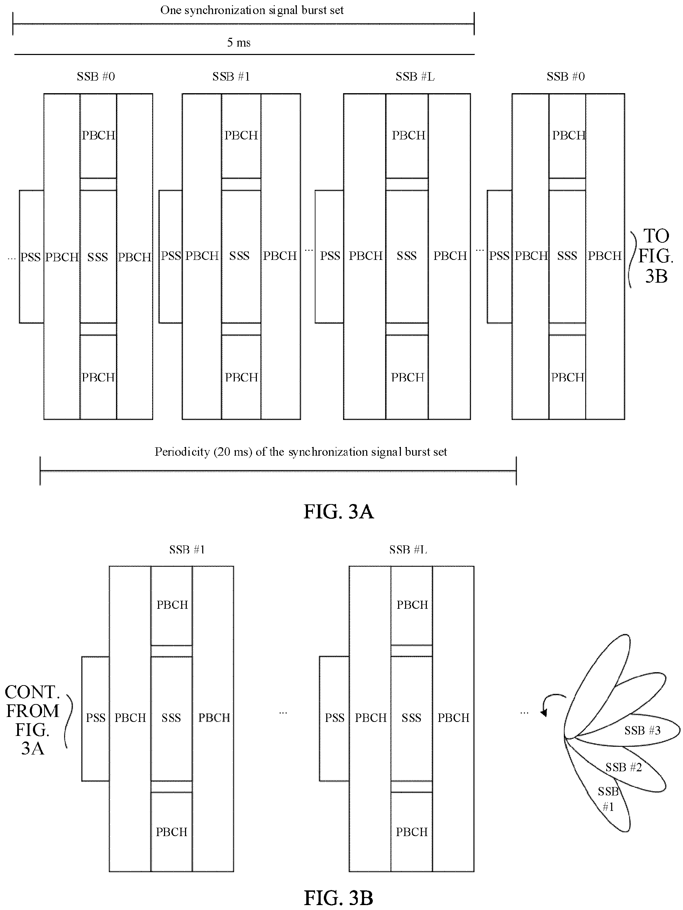

One synchronization burst set (synchronization signal burst set, SS burst set) is a set of SSBs included in one beam sweeping (beam sweeping). A periodicity of the SS burst set is equivalent to a periodicity of an SSB corresponding to a specific beam, and may be configured as 5 ms (millisecond), 10 ms, 20 ms, 40 ms, 80 ms, 160 ms, or the like. 20 ms is a default periodicity, that is, a periodicity assumed when UE initially searches for a cell. After entering an RRC connected (RRC_CONNECTED) state, the periodicity of the SS burst set may be configured as another periodicity. Currently, there are a maximum of $L_{max}$ SSBs in the periodicity of the SS burst set, where $L_{max}$ = 4, 8, or 64. When a carrier frequency is less than or equal to 3 GHz, Lmax = 4. To be specific, there are a maximum of four SSBs in the periodicity of the SS burst set, and a maximum of four times of beam sweeping can be supported. Each SS burst set is always located in an interval of 5 ms, and is a first half part or a second half part of one frame (frame) of 10 ms. As shown in FIG. 3A and FIG. 3B, a periodicity of one SS burst set is 20 ms, and the SS burst set includes L SSBs.

A PBCH carries a master information block (Master Information Block, MIB). An update periodicity of the MIB is 80 ms. To be specific, information about the MIB carried on all PBCHs in a periodicity of 80 ms is the same. For example, an SSB with a same index value is repeatedly sent four times in the periodicity of the MIB of 80 ms. Generally, the UE may perform combined detection on received SSB data with a same index value, to improve demodulation performance of the PBCH. A quantity of bits of information carried by an existing PBCH is 32. In other words, a payload size (payload size) of the PBCH is 32 bits (bits). The 32-bit information includes 24-bit higher layer information and 8-bit physical layer information (where the 8-bit physical layer information is also referred to as L1 information). The 24-bit higher layer information includes information in the MIB and 1-bit choice information. The 1-bit choice (choice) information indicates whether the MIB is an extension message. Table 3 is a schematic table of a plurality of bits (fields) included in the MIB and function descriptions.

**Table 3**

| Parameter (Field) | Quantity of bits | Function |
| --- | --- | --- |
| System frame number (System Frame Number) | 6 | Six high-order bits of the system frame number |
| Common subcarrier spacing (subCarrierSpacingCommon) | 1 | Subcarrier spacing between a PDCCH for scheduling a SIB1 and a PDSCH for carrying the SIB 1 |
| Subcarrier offset of an SSB (SSB-SubcarrierOffset) | 4 | Subcarrier offset of the SSB |
| Symbol position of a TypeA DMRS (Dmrs-TypeA-Position) | 1 | Time domain symbol position (symbol 2 or symbol 3) of the DMRS in the case of TypeA PDSCH mapping |
| PDCCH SIB 1 configuration (pdcch-ConfigSIB1) | 8 | A PDCCH configuration related to the SIB1 includes a Coreset and search space in which the PDCCH is located |
| Cell barred access (cellBarred) | 1 | Identifier indicating whether access to a cell is barred |
| Intra-frequency cell reselection (IntraFreqReselction) | 1 | When cell access is barred, a terminal attempts to access another intra-frequency cell |
| Spare (spare) | 1 | Reserved 1 bit |

A dedicated network may implement network signal coverage in a specific area, and provide a communication service for a specific user in organization, command, management, production, scheduling, and other phases. For example, the dedicated network may be applied to scenarios such as a railway mobile radio network, a smart grid, public protection and disaster relief (public protection and disaster relief, PPDR). A system bandwidth of the dedicated network is far less than an existing NR system bandwidth. For example, the system bandwidth of the dedicated network may be 3 MHz to 5 MHz. However, as shown in Table 1, when the subcarrier spacing is 15 kHz, the bandwidth of the PBCH is greater than 3 MHz; when the subcarrier spacing is 30 kHz, the bandwidth of the PBCH is greater than 5 MHz. Therefore, an existing SSB may fail to be transmitted in a bandwidth-limited system such as the dedicated network.

For these narrowband spectrums, a new narrowband air interface, for example, narrowband NR (Narrowband NR, NB-NR), needs to be introduced. Main application scenarios of the NB-NR are some dedicated networks. Therefore, coexistence of the NB-NR, an existing NR network and existing UE, for example, Rel-15 eMBB, may not be considered. In addition, NB-NR UE has no requirements for low costs, low complexity, low power consumption, and the like. In other words, UE supporting the NB-NR may be UE supporting enhanced mobile broadband (enhanced mobile broadband, eMBB), UE supporting ultra-reliable low-latency communication (ultra-reliability low-latency communication, URLLC), or UE with a reduced capability, for example, REDCAP (reduced capability NR device). In other words, the UE supporting the NB-NR may be broadband UE or narrowband UE. A maximum bandwidth supported by the narrowband UE is less than a maximum bandwidth supported by the broadband UE. For example, the narrowband UE supports a maximum bandwidth of 5 MHz, and the broadband UE supports a maximum bandwidth of 100 MHz. It may be understood that, the following case is not excluded: The NB-NR may be applied to some other non-dedicated network scenarios. An application scenario of the NB-NR is not limited in embodiments of this application.

To resolve the foregoing technical problem, the following describes the method provided in embodiments of this application with reference to the accompanying drawings. It may be understood that in the following described method embodiments, only an example in which execution bodies are a network device and a terminal device is used for description. The network device mentioned in the method embodiments may alternatively be replaced with a chip disposed in the network device to be performed, or the terminal device may alternatively be replaced with a chip disposed in the terminal device to be performed. The terminal device and the network device may be specifically various forms mentioned above. In addition, although embodiments of this application are described by using the network device and the terminal device, it may be understood that different functions in the method may be performed by different network devices. For example, different functions of a base station may be implemented by different network units. Different operations in embodiments may be implemented by the different network units that implement the different functions of the base station, or certainly, may be implemented by a network unit. This is not limited in embodiments of this application. These network units or this network unit is collectively referred to as the network device.

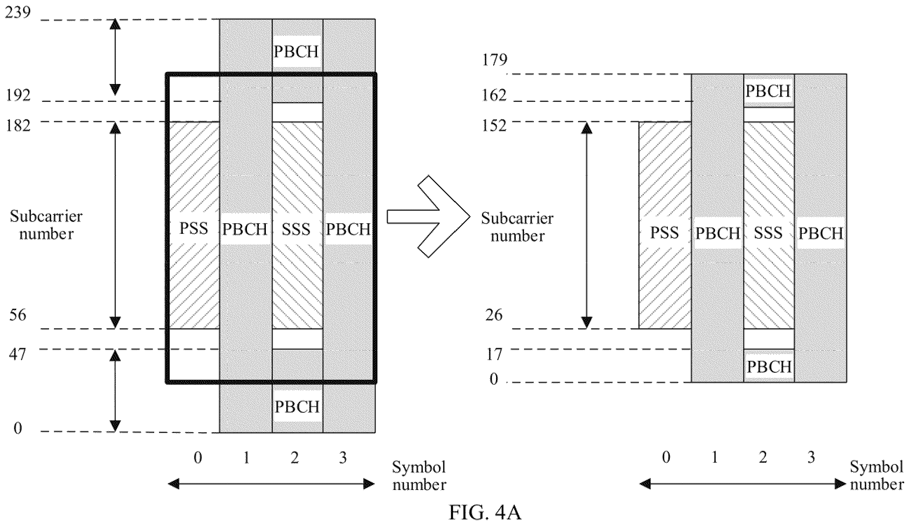

FIG. 4A to FIG. 4D are schematic diagrams of structures of SSBs according to embodiments of this application. The following describes PBCH mapping resources provided in embodiments of this application with reference to FIG. 4A to FIG. 4D.

A first physical resource is a physical resource to which a first PBCH and a first PBCH DMRS are mapped. In other words, the first physical resource is a physical resource occupied by the first PBCH and the first PBCH DMRS. One RE corresponds to one physical resource. Therefore, the first physical resource is an RE to which the first PBCH and the first PBCH DMRS are mapped, or the first physical resource is an RE occupied by the first PBCH and the first PBCH DMRS.

The first PBCH is a PBCH in a first SSB. The first SSB occupies four symbols in time domain and occupies X subcarriers in frequency domain, where X is a positive integer less than 240. Optionally, X is less than or equal to 216. Further, when a subcarrier spacing is 15 kHz, X is less than or equal to 216, or X is greater than or equal to 180 and less than or equal to 216. Optionally, X is less than or equal to 150. Further, when a subcarrier spacing is 30 kHz, X is less than or equal to 150, or X is greater than or equal to 144 and less than or equal to 150.

Optionally, X is greater than 127. A quantity of subcarriers occupied by an existing PSS or SSS in frequency domain is 127. Therefore, an existing synchronization sequence maybe used, to ensure synchronization performance. In particular, for terminal devices having narrowband access and broadband access, a same synchronization detection algorithm is used, to reduce implementation complexity.

For example, X is 180. When a subcarrier spacing is 15 kHz, a frequency domain bandwidth of the first SSB is 2.7 MHz. This solution is applicable to a system bandwidth not greater than 3.6 MHz. If the system bandwidth is 3 MHz, 0.3 MHz may be further reserved on two sides of the first SSB as a guard band (guard band). In this case, the guard band accounts for 10% of the system bandwidth, and resource utilization is high.

For example, X is 192. When a subcarrier spacing is 15 kHz, a frequency domain bandwidth of the first SSB is 2.88 MHz. This solution is applicable to a system bandwidth not greater than 3.6 MHz. If the system bandwidth is 3 MHz, 0.12 MHz may be further reserved on two sides of the first SSB as a guard band. If the system bandwidth is 3.6 MHz, 0.72 MHz may be further reserved on two sides of the first SSB as a guard band.

For example, X is 216. When a subcarrier spacing is 15 kHz, a frequency domain bandwidth of the first SSB is 3.24 MHz. This solution is applicable to a system bandwidth not greater than 3.6 MHz. If the system bandwidth is 3.6 MHz, 0.36 MHz may be further reserved on two sides of the first SSB as a guard band. In this case, the guard band accounts for 10% of the system bandwidth, and resource utilization is high.

For example, X is 144. When a subcarrier spacing is 30 kHz, a frequency domain bandwidth of the first SSB is 4.32 MHz, and is applicable to a system bandwidth not greater than 7.2 MHz. If the system bandwidth is 5 MHz, 0.68 MHz may be further reserved on two sides of the first SSB as a guard band.

For example, X is 150. When a subcarrier spacing is 30 kHz, a frequency domain bandwidth of the first SSB is 4.5 MHz, and is applicable to a system bandwidth not greater than 7.2 MHz. If the system bandwidth is 5 MHz, 0.5 MHz may be further reserved on two sides of the first SSB as a guard band. In this case, the guard band accounts for 10% of the system bandwidth, and resource utilization is high.

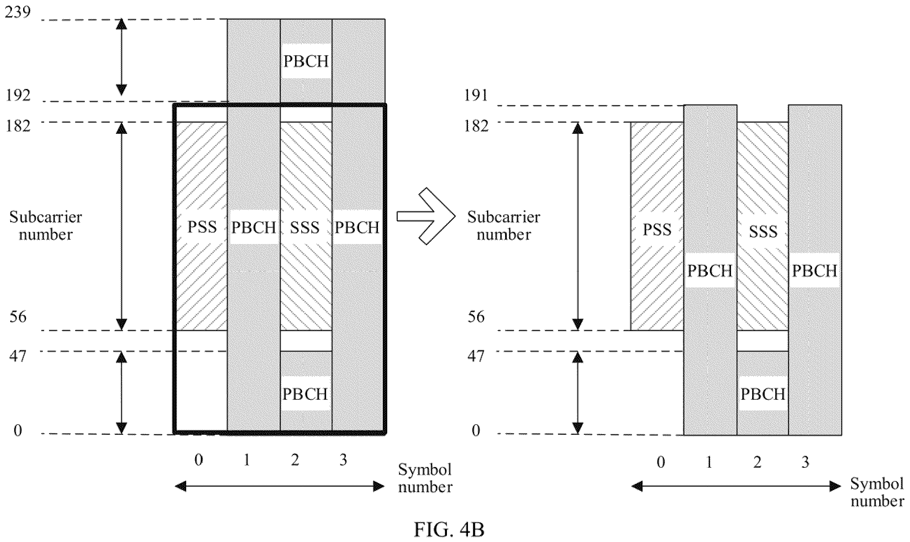

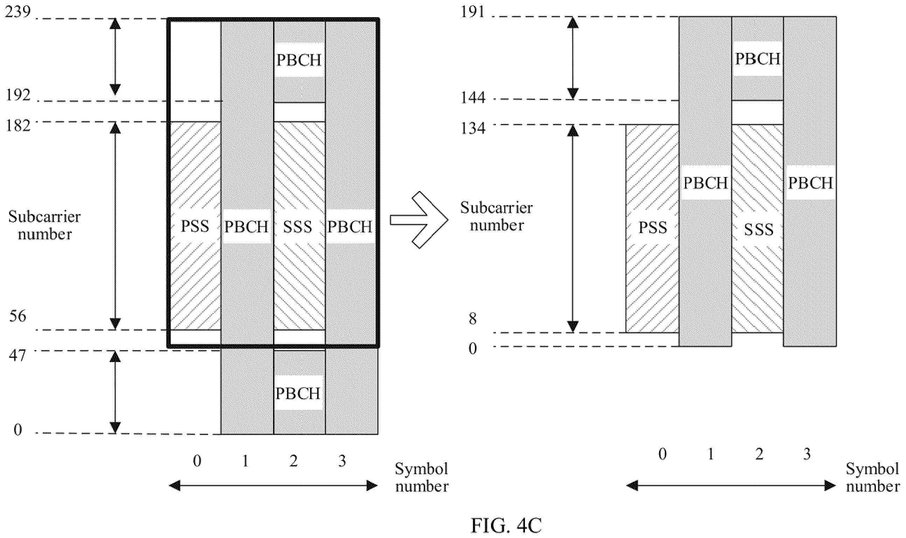

Optionally, in the first SSB, the first physical resource includes all REs in a $2^{nd}$ symbol and a $4^{th}$ symbol, and further includes Y REs in a $3^{rd}$ symbol, where Y is a positive integer less than X. For example, the Y REs are located on two sides of the X subcarriers in frequency domain. It should be noted that the Y REs may be evenly distributed on the two sides of the X subcarriers, or may be unevenly distributed on the two sides of the X subcarriers. For example, the Y REs are located in the first Y subcarriers or the last Y subcarriers in the X subcarriers in frequency domain. As shown in a right part of FIG. 4A, X is 180, Y is 36, and in the $3^{rd}$ symbol, subcarrier numbers of the Y REs are 0 to 17 and 162 to 179. It should be noted that the Y REs may be evenly distributed on the two sides of the X subcarriers, as shown in the right part of FIG. 4A; or the Y REs may be unevenly distributed on the two sides of the X subcarriers. For example, X is 216, Y is 72, and in the $3^{rd}$ symbol, subcarrier numbers of the Y REs are 0 to 47 and 192 to 215. For example, the Y REs are located in the first Y subcarriers in the X subcarriers in frequency domain. As shown in a right part of FIG. 4B, X is 192, Y is 48, and in the $3^{rd}$ symbol, subcarrier numbers of the Y REs are 0 to 47. For example, the Y REs are located in the last Y subcarriers in the X subcarriers in frequency domain. As shown in a right part of FIG. 4C, X is 192, Y is 48, and in the $3^{rd}$ symbol, subcarrier numbers of the Y REs are 144 to 191.

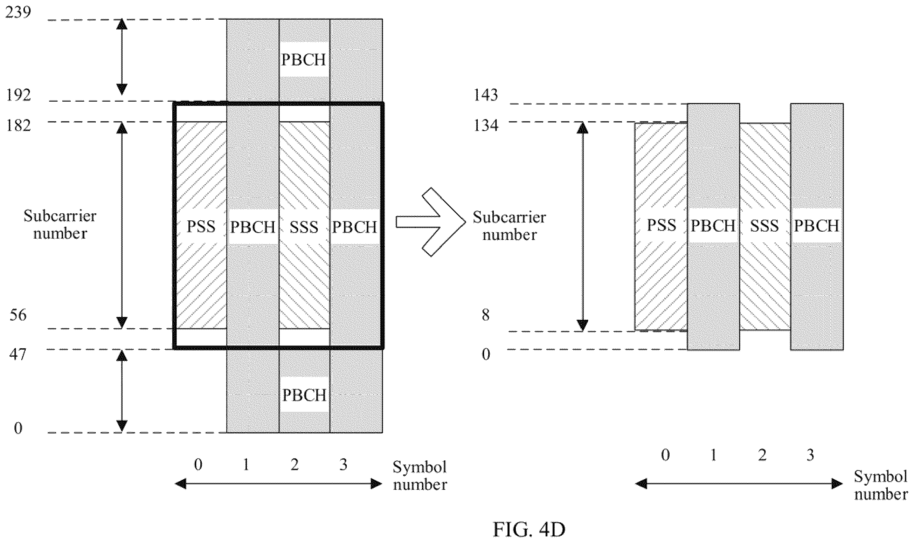

Optionally, the first physical resource includes only all REs in a $2^{nd}$ symbol and a $4^{th}$ symbol, that is, the first physical resource does not include REs in a $3^{rd}$ symbol. As shown in a right part of FIG. 4D, the first PBCH is not mapped to the $3^{rd}$ symbol, that is, Y is 0.

In a possible implementation, the first physical resource is determined based on a first frequency domain pattern. The first frequency domain pattern indicates a frequency domain resource occupied by the first PBCH, or the first frequency domain pattern indicates a subcarrier occupied by the first PBCH. For example, the first frequency domain pattern indicates a frequency domain resource occupied by the first PBCH and the first PBCH DMRS in the first SSB. A network device maps the first PBCH and the first PBCH DMRS to the first physical resource based on the first frequency domain pattern. Correspondingly, UE determines the first physical resource based on the first frequency domain pattern.

The first frequency domain pattern is a part of patterns included in a second frequency domain pattern, that is, the first frequency domain pattern is the same as the part of patterns included in the second frequency domain pattern. The first frequency domain pattern is a frequency domain resource pattern in a first resource area, and the second frequency domain pattern is a frequency domain resource pattern in a second resource area. The first resource area is a part of the second resource area, that is, the first resource area is a sub-area of the second resource area. Correspondingly, the first frequency domain pattern is a pattern of the second frequency domain pattern in the first resource area. It should be noted that resource areas in the "first resource area" and the "second resource area" are not real physical resource areas, but relative resource areas; or the resource areas are virtual resource ranges for defining a frequency domain pattern. In other words, the frequency domain pattern is a frequency domain pattern in a resource range.

Optionally, the second resource area is a resource range occupied by the existing SSB described above. In other words, the second resource area occupies four consecutive symbols in time domain and occupies 240 consecutive subcarriers in frequency domain. The second frequency domain pattern is a pattern of a frequency domain resource occupied by an existing PBCH and an existing PBCH DMRS in the existing SSB. As shown in FIG. 2, FIG. 4A, FIG. 4B, FIG. 4C, and FIG. 4D, the second frequency domain pattern includes: in the $2^{nd}$ symbol and the $4^{th}$ symbol in the four symbols, the frequency domain resource is the 240 subcarriers; and in the $3^{rd}$ symbol in the four symbols, the frequency domain resource is 96 subcarriers in the 240 subcarriers. The 96 subcarriers are the first 48 subcarriers and the last 48 subcarriers in the 240 subcarriers.

Optionally, the first resource area is a resource range occupied by the first SSB. The first resource area occupies four consecutive symbols in time domain and occupies X consecutive subcarriers in frequency domain, where X is a positive integer less than 240. For the resource range occupied by the first SSB, refer to the foregoing descriptions. The first frequency domain pattern is a pattern of a frequency domain resource occupied by the first PBCH in the first SSB.

Optionally, X is greater than 127. The quantity of subcarriers occupied by the existing PSS or SSS in frequency domain is 127. Therefore, the existing synchronization sequence may be used. In particular, for a puncturing manner (as described in S630), all REs of the PSS and the SSS need to be reserved as much as possible. Alternatively, if all REs of the PSS and the SSS do not need to be reserved as much as possible, time and frequency synchronization performance of the UE is affected after the PSS and the SSS are punctured.

For example, in time domain, the first resource area and the second resource area occupy four same symbols; and in frequency domain, the X consecutive subcarriers occupied by the first resource area are the middle X consecutive subcarriers in the 240 consecutive subcarriers occupied by the second resource area. The first frequency domain pattern includes: in a $2^{nd}$ symbol and a $4^{th}$ symbol in the four symbols, the frequency domain resource is the X subcarriers; and in a $3^{rd}$ symbol in the four symbols, the frequency domain resource is Y subcarriers in the 96 subcarriers, where Y is a positive integer less than 96. As shown in a left part of FIG. 4A, a black box is the first resource area, the black box occupies four symbols in time domain and occupies the middle 180 subcarriers in frequency domain. The first frequency domain pattern includes: in a $2^{nd}$ symbol and a $4^{th}$ symbol in the four symbols, the frequency domain resource is the 180 subcarriers; and in a $3^{rd}$ symbol in the four symbols, the frequency domain resource is the middle 36 subcarriers in the 96 subcarriers, where the 36 subcarriers are the first 18 subcarriers and the last 18 subcarriers in the X subcarriers. As shown in a left part of FIG. 4D, a black box is the first resource area, the black box occupies four symbols in time domain and occupies the middle 144 subcarriers in frequency domain. The first frequency domain pattern includes only: in a $2^{nd}$ symbol and a $4^{th}$ symbol in the four symbols, the frequency domain resource is the 144 subcarriers.

For example, in time domain, the first resource area and the second resource area occupy four same symbols; and in frequency domain, the X consecutive subcarriers occupied by the first resource area are the first X consecutive subcarriers, or the last X consecutive subcarriers in the 240 consecutive subcarriers occupied by the second resource area. As shown in a left part of FIG. 4B, a black box is the first resource area, the black box occupies four symbols in time domain and occupies the first 192 subcarriers in frequency domain. The first frequency domain pattern includes: in a $2^{nd}$ symbol and a $4^{th}$ symbol in the four symbols, the frequency domain resource is the 192 subcarriers; and in a $3^{rd}$ symbol in the four symbols, the frequency domain resource is the first 48 subcarriers in the 96 subcarriers. As shown in a left part of FIG. 4C, a black box is the first resource area, the black box occupies four symbols in time domain and occupies the last 192 subcarriers in frequency domain. The first frequency domain pattern includes: in a $2^{nd}$ symbol and a $4^{th}$ symbol in the four symbols, the frequency domain resource is the 192 subcarriers; and in a $3^{rd}$ symbol in the four symbols, the frequency domain resource is the last 48 subcarriers in the 96 subcarriers.

In another possible implementation, the first physical resource is determined based on a first RE pattern. A network device maps the first PBCH to the first physical resource based on the first RE pattern. Correspondingly, UE determines the first physical resource based on the first RE pattern. The first RE pattern is a part of a second RE pattern. The first RE pattern is a resource element pattern in the first resource area, and the second RE pattern is a resource element pattern in the second resource area. The first resource area is a sub-area of the second resource area. Correspondingly, the first frequency domain pattern is a pattern of the second frequency domain pattern in the first resource area. For the first resource area and the second resource area, refer to the foregoing specific descriptions. Details are not described herein again.

For example, in time domain, the first resource area and the second resource area occupy four same symbols; and in frequency domain, the X consecutive subcarriers occupied by the first resource area are the middle X consecutive subcarriers, the first X consecutive subcarriers, or the last X consecutive subcarriers in the 240 consecutive subcarriers occupied by the second resource area. REs in the second RE pattern include all 240 REs in a $2^{nd}$ symbol in the four symbols, all 240 REs in a $4^{th}$ symbol in the four symbols, and 96 REs in a $3^{rd}$ symbol in the four symbols, where the 96 REs are located in the first 48 subcarriers and the last 48 subcarriers in the 240 subcarriers in frequency domain. REs in the first RE pattern include the middle X REs, the first X REs, or the last X REs in a $2^{nd}$ symbol in the four symbols; the middle X REs, the first X REs, or the last X REs in a $4^{th}$ symbol in the four symbols; and the middle Y REs, the first Y REs, or the last Y REs in the 96 REs in a $3^{rd}$ symbol in the four symbols, where Y is a positive integer less than 96. To reduce mutual interference between SSBs of a plurality of cells, different resource areas may be configured for different cells. For example, an SSB of a cell A is located in the first X consecutive subcarriers in frequency domain, and an SSB of a cell B is located in the last X consecutive subcarriers in frequency domain.

A second physical resource is a physical resource to which a second PBCH and a second PBCH DMRS are mapped. In other words, the second physical resource is a physical resource occupied by the second PBCH and the second PBCH DMRS. One RE corresponds to one physical resource. Therefore, the second physical resource is an RE to which the second PBCH and the second PBCH DMRS are mapped, or the second physical resource is an RE occupied by the second PBCH and the second PBCH DMRS.

The second PBCH is a PBCH in a second SSB. The second SSB occupies four symbols in time domain and occupies X subcarriers in frequency domain, where X is a positive integer less than 240.

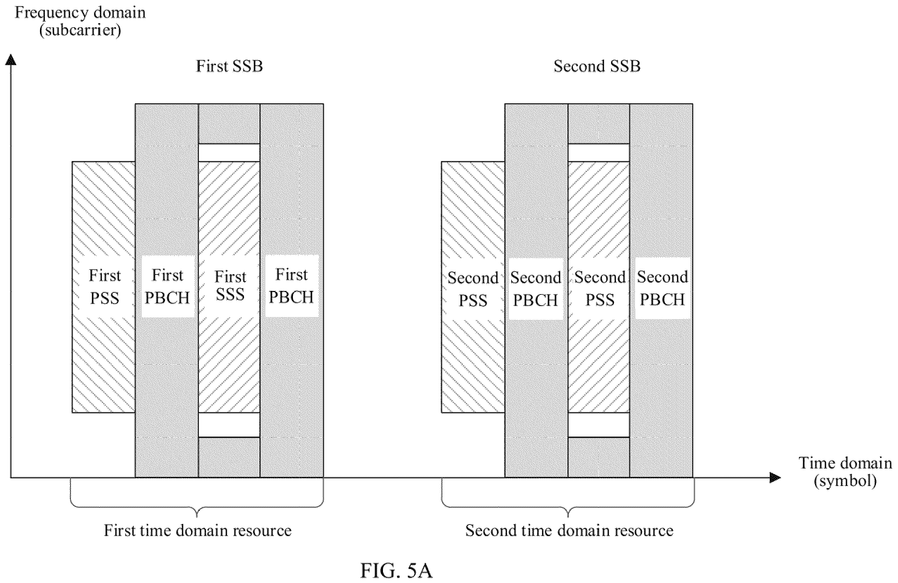

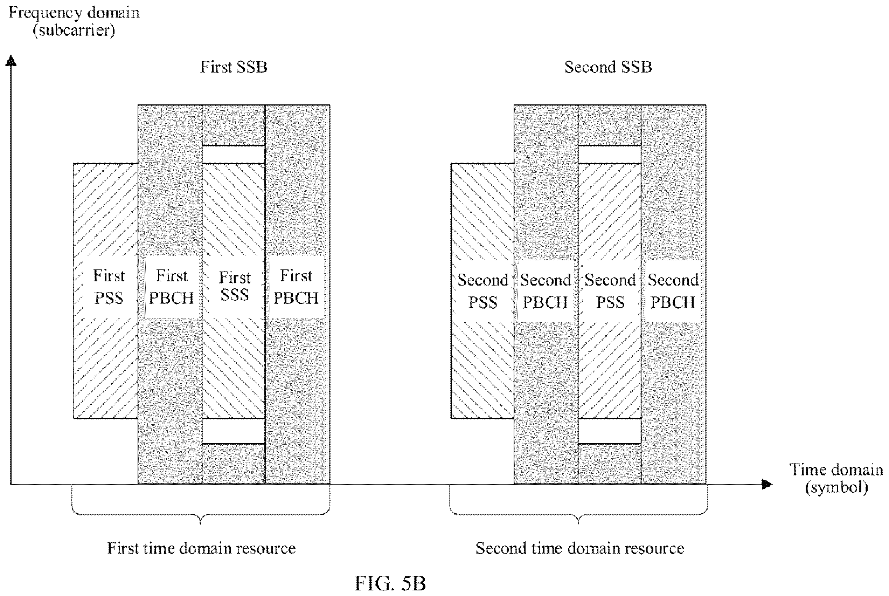

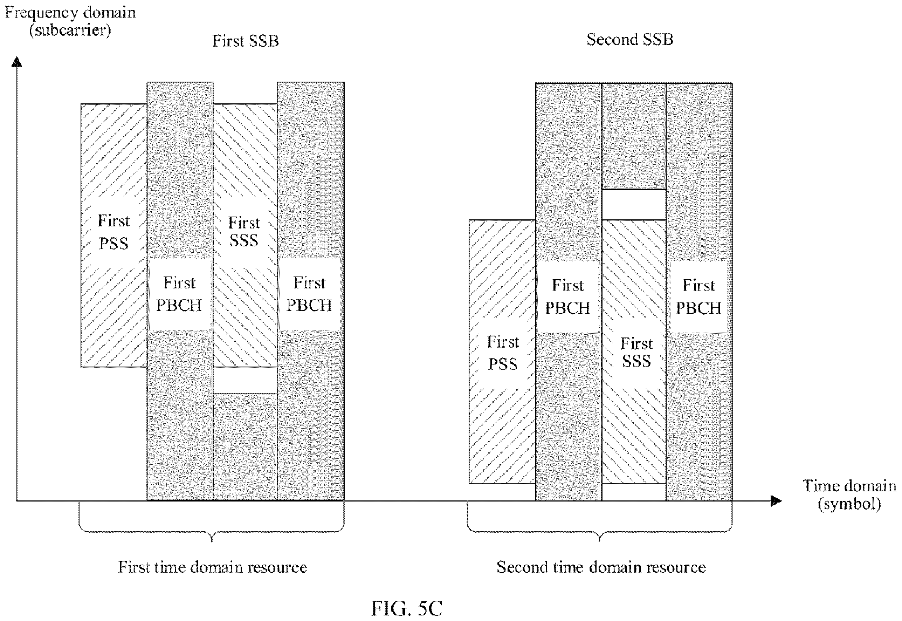

The second physical resource and the first physical resource are located in different time domain resources. In other words, the first PBCH and the second PBCH are located in different time domain resources, and the first SSB and the second SSB are located in different time domain resources. Details are shown in FIG. 5A, FIG. 5B, and FIG. 5C. Optionally, the first SSB and the second SSB may be located in different SSB bursts. The first SSB and the second SSB are respectively located in two consecutive SSB bursts.

For example, the second PBCH and the first PBCH occupy a same frequency domain resource. In other words, the second PBCH is also determined based on the first frequency domain pattern. As shown in FIG. 5A and FIG. 5B, a frequency domain resource occupied by the second PBCH in the second SSB is the same as the frequency domain resource occupied by the first PBCH in the first SSB, but three symbols occupied by the second PBCH are different from three symbols occupied by the first PBCH. Optionally, the first SSB and the second SSB occupy a same frequency domain resource and have a same structure. As shown in FIG. 5A, a time frequency domain resource of a first PSS, a first SSS, and the first PBCH in the first SSB is the same as a time frequency domain resource of a second PSS, a second SSS, and the second PBCH in the second SSB. In other words, the first SSB and the second SSB have a same structure. Optionally, the first SSB and the second SSB occupy a same frequency domain resource but have different structures. As shown in FIG. 5B, a time domain resource of a first PSS and a first SSS in the first SSB is different from a time domain resource of a second PSS and a second SSS in the second SSB. In other words, the first SSB and the second SSB have different structures. When detecting an SSB, the UE does not know a position of a carrier. Therefore, for a puncturing scenario mentioned in S630, the UE does not know a punctured part in a current SSB. Therefore, when combination processing is performed on the first SSB and the second SSB, processing complexity is high. To reduce processing complexity of a PBCH, the network device may explicitly or implicitly notify a mapping manner of the PBCH. For example, a resource pattern of the PBCH may be indicated based on positions of a PSS and an SSS. Specifically, a mapping manner for sending the PBCH may be indicated based on relative positions of the PSS and the SSS. As shown in FIG. 5B, the PSS is located in a relative position symbol 0 in the SSB, and the SSS is located in a relative position symbol 2 in the SSB, to indicate resource mapping A (for example, mapping of subcarriers in descending order), the PSS is located in a relative position symbol 2 in the SSB, and the SSS is located in a relative position symbol 0 in the SSB, to indicate resource mapping B (for example, mapping of subcarriers in ascending order). For example, a resource pattern for sending the PBCH may alternatively be indicated by a sequence of the PSS and/or the SSS.

For example, the second PBCH and the first PBCH occupy frequency domain resources that are not completely the same. In this case, the second PBCH is determined based on a third frequency domain pattern or a third RE pattern. The third frequency domain pattern or the third RE pattern is a frequency domain resource pattern or a resource element pattern in a third resource area, and the third frequency domain pattern or the third RE pattern is a pattern of the second frequency domain pattern or the second RE pattern in the third resource area. The third frequency domain pattern/third RE pattern is not completely the same as the second frequency domain pattern/third RE pattern. For example, the second resource area occupies four consecutive symbols in time domain and occupies 240 consecutive subcarriers in frequency domain, the first resource area occupies the four consecutive symbols in time domain and occupies the first X subcarriers in the 240 consecutive subcarriers in frequency domain, and the third resource area occupies the four consecutive symbols in time domain and occupies the last X subcarriers in the 240 consecutive subcarriers in frequency domain. For another example, the second resource area occupies four consecutive symbols in time domain and occupies 240 consecutive subcarriers in frequency domain, the first resource area occupies the four consecutive symbols in time domain and occupies the last X subcarriers in the 240 consecutive subcarriers in frequency domain, and the third resource area occupies the four consecutive symbols in time domain and occupies the first X subcarriers in the 240 consecutive subcarriers in frequency domain. As shown in FIG. 5C, a frequency domain resource occupied by the second PBCH in a $3^{rd}$ symbol in the second SSB is different from a frequency domain resource occupied by the first PBCH in a $3^{rd}$ symbol in the first SSB, and three symbols occupied by the second PBCH are different from three symbols occupied by the first PBCH.

Because a system bandwidth is limited, for intra-frequency networking cells, that is, in a scenario in which adjacent cells use a same frequency band or bandwidth resource, mutual interference between SSBs of the adjacent cells cannot be reduced by using a frequency division method. Therefore, to further reduce the mutual interference between the SSBs of the adjacent cells, interference may be reduced by using a time division method of the SSBs of the adjacent cells. Optionally, SSB bursts of a plurality of adjacent cells may be located in different half-frames. For example, an SSB burst of the cell A is located in a first half-frame of a system frame, and an SSB burst of the cell B is located in a second half-frame of the system frame.

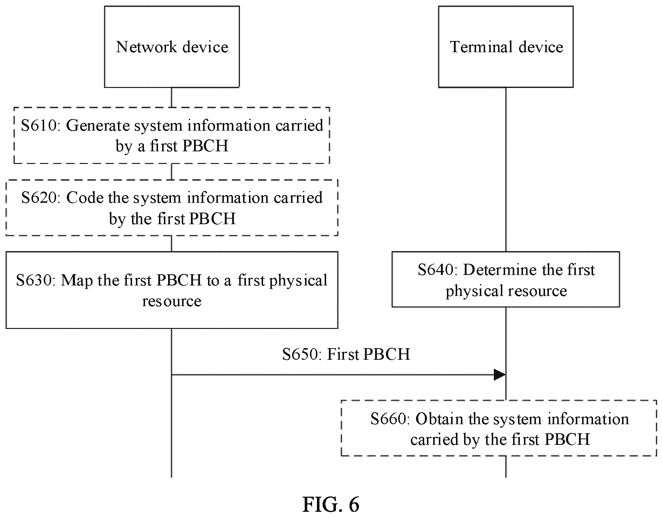

FIG. 6 is a schematic flowchart of a communication method according to an embodiment of this application. Steps shown in FIG. 6 are described below. It should be noted that steps represented by dashed lines in FIG. 6 are optional. Details are not described below.

S610: A network device generates system information carried by a first PBCH.

The system information carried by the first PBCH may also be referred to as a payload of the first PBCH for short. In other words, the network device generates the payload of the first PBCH.

Optionally, a quantity of bits of the system information is M bits, that is, a payload size of the first PBCH is M bits, where M is less than 32. The M-bit information includes a MIB. In a narrowband system, physical resources for transmitting a PBCH are reduced, and consequently transmission performance of the PBCH is reduced, and access of UE to a cell is affected. Therefore, the payload of the first PBCH is less than a payload size of 32 bits of an existing PBCH, so that a bit rate can be reduced, thereby helping improve performance of the first PBCH.

For example, the MIB does not include "subCarrierSpacingCommon" information. In this case, a subcarrier spacing between a PDCCH for scheduling a SIB 1 and a PDSCH for carrying the SIB1 is fixed to 15 kHz. In a dedicated network scenario, a frequency division duplex (frequency division duplex, FDD) scenario and a 15 kHz subcarrier spacing scenario are considered. Therefore, if the subcarrier spacing is fixed to 15 kHz, a system configuration is slightly affected.

For example, the MIB does not include "dmrs-TypeA-Position" information. In this case, a DMRS symbol position may be fixed to a symbol 3 in the case of TypeA PDSCH mapping. A bandwidth of the narrowband system is small, and a quantity of time domain symbols of a control resource set #0 (control resource set #0, CORESET #0) may be fixed to 3, to ensure that there are sufficient resources for transmitting the PDCCH, and further ensure transmission performance of the PDCCH. Correspondingly, the DMRS symbol position may be fixed to the symbol 3 in the case of TypeA PDSCH mapping.

For example, a quantity of bits of "pdcch-ConfigSIB1" information included in the MIB is less than 8, or the MIB does not include "pdcch-ConfigSIB1" information. Because the bandwidth of the narrowband system is small, some configurations of the CORESET #0 and/or a Type0-PDCCH CSS set may be predefined. For example, a quantity of RBs is predefined as a value of a system bandwidth, a quantity of symbols is predefined as 3, and an offset (RBs) between SSBs is predefined as 0, or a multiplexing pattern between the SSB and a CORESET is predefined as 1. Optionally, some configuration parameters of the Type0-PDCCH CSS set may also be predefined, and the MIB may no longer include a pdcch-ConfigSIB 1 indication field.

For example, a quantity of bits of physical layer information included in the system information is less than 8. A payload of an existing PBCH includes eight additional timing-related bits. Considering that frequency bands of a dedicated network are all below 3 GHz, a maximum of four SSB beams are supported. Therefore, reserved bits of $\overline{a}_{A+6}$ and $\overline{a}_{A+7}$ may not be sent, where $\overline{a}_{A+6}$ and $\overline{a}_{A+7}$ are bits whose index numbers are 6 and 7 in the eight additional timing-related bits. To avoid inter-cell interference, SSB bursts between different cells may be located in different half-frames. In an implementation, a half-frame number in which an SSB burst is located is related to a cell ID (for example, a PCI). For example, the half-frame number in which the SSB burst is located = Cell ID mod X, where mod is a modulo operation, and X is a positive integer. For example, X may be a quantity of half-frames in 20 ms. According to the foregoing method, for NB-NR, a quantity of additional timing-related bits added to a PBCH physical layer may be less than 8, for example, may be 5.

S620: The network device codes the system information carried by the first PBCH.

Coded bits of the first PBCH are bits obtained by coding the system information. As shown in FIG. 7, coding of the first PBCH includes operations such as cyclic redundancy check (cyclic redundancy check, CRC) addition, channel coding (channel coding), and rate matching (rate matching). For example, for the CRC addition, the channel coding, and the rate matching, refer to 7.1.3, 7.1.4, and 7.1.5 in TS 38.212 respectively.

In a first possible implementation, the network device codes, based on a first frequency domain pattern or a first RE pattern, the system information carried by the first PBCH. In other words, a quantity of coded bits of the first PBCH is determined based on the first frequency domain pattern or the first RE pattern. For example, it is determined, based on the first frequency domain pattern or the first RE pattern shown in FIG. 4A, that a quantity of REs in a first resource area is 396. In frequency domain, one of every four subcarriers is occupied by a PBCH DMRS. Therefore, a quantity of REs occupied by the first PBCH is 396 - 396/4 = 297. A modulation scheme for the first PBCH is QPSK (where modulation efficiency of the QPSK is 2). Therefore, the quantity of coded bits of the first PBCH is 297 * 2 = 594.

In a second possible implementation, the network device codes, based on a second frequency domain pattern or a second RE pattern, the system information carried by the first PBCH. In other words, a quantity of coded bits of the first PBCH is determined based on the second frequency domain pattern or the second RE pattern. For example, the second frequency domain pattern or the second RE pattern is an existing SSB pattern shown in Table 1 and FIG. 2. It is determined, based on the second frequency domain pattern or the second RE pattern, that a quantity of REs in a second resource area is 576, where a quantity of REs for transmitting a PBCH is 432, and a modulation scheme for the first PBCH is QPSK. Therefore, the quantity of coded bits of the first PBCH is 432 * 2 = 864.

S630: The network device maps the first PBCH to a first physical resource.

For the first physical resource, refer to the foregoing descriptions. Details are not described herein again.

A first PBCH DMRS is a reference signal for demodulating the first PBCH. Therefore, the step further includes: The network device maps the first PBCH DMRS to the first physical resource. In other words, S630 includes: The network device maps the first PBCH to a physical resource that is in the first physical resource and that is used to transmit the first PBCH, or the network device maps a modulation symbol of the first PBCH to a physical resource that is in the first physical resource and that is used to transmit the first PBCH; and the network device maps the first PBCH DMRS to a physical resource that is in the first physical resource and that is used to transmit the first PBCH DMRS, or the network device maps a sequence of the first PBCH DMRS to a physical resource that is in the first physical resource and that is used to transmit the first PBCH DMRS. The modulation symbol of the first PBCH means a modulation symbol obtained by performing channel coding, modulation, and the like on the system information carried by the first PBCH/the payload of the first PBCH.

Step S630 is a step of generating the first PBCH or the first PBCH DMRS by the network device. For example, as shown in FIG. 7, that the network device generates the first PBCH includes: The network device performs CRC addition, channel coding, rate matching, scrambling, modulation, physical resource mapping (to be specific, the network device maps the first PBCH to the physical resource for transmitting the first PBCH), OFDM baseband signal generation processing, and the like on the payload of the first PBCH. A baseband signal obtained through the processing represents the first PBCH. For example, that the network device generates the first PBCH DMRS includes: first PBCH DMRS sequence generating, physical resource mapping (to be specific, the network device maps the first PBCH DMRS to a physical resource for transmitting the first PBCH DMRS), OFDM baseband signal generation processing, and the like. The baseband signal obtained through the processing represents the first PBCH DMRS.

In a possible implementation, S630 includes: The network device determines the first physical resource according to a predefined rule or a prestored rule, and then maps the first PBCH and the first PBCH DMRS to the first physical resource. The predefined rule or the rule prestored in the network device indicates the first physical resource.

In another possible implementation, the first physical resource is determined based on a first frequency domain pattern or a first RE pattern. The network device maps the first PBCH and the first PBCH DMRS to the first physical resource based on the first frequency domain pattern or the first RE pattern. For example, S630 includes: The network device determines the first physical resource based on a frequency domain resource in the first frequency domain pattern or an RE in the first RE pattern, and then maps the first PBCH and the first PBCH DMRS to the first physical resource. For the first frequency domain pattern, refer to the foregoing descriptions. Details are not described herein again.

In S630, with reference to the first possible implementation in S620, that is, both the quantity of coded bits of the first PBCH and the first physical resource are determined based on the first frequency domain pattern or the first RE pattern, rate matching is performed on the first PBCH in the narrowband system based on the first physical resource, so that a problem that an existing PBCH cannot be sent in a narrowband can be resolved.

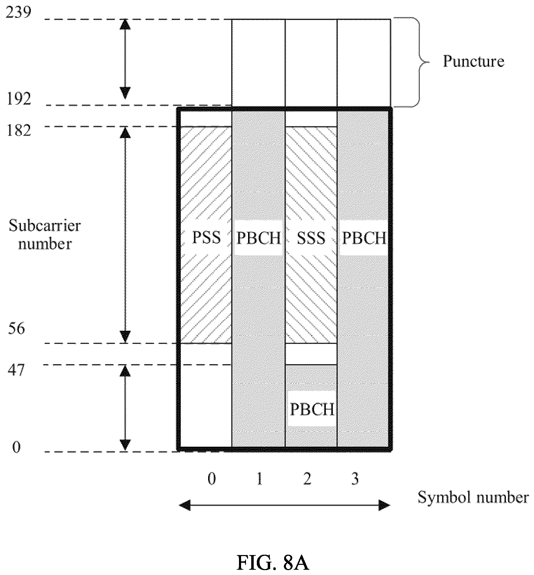

In S630, with reference to the second possible implementation in S620, that is, the quantity of coded bits of the first PBCH is determined based on the second frequency domain pattern or the second RE pattern, but the first physical resource is determined based on the first frequency domain pattern or the first RE pattern, rate matching is performed on the first PBCH in the narrowband system based on a physical resource of the existing PBCH, but the first PBCH is mapped to the first physical resource. Because a quantity of first physical resources is less than a quantity of physical resources of the existing PBCH, coded bits of the first PBCH that cannot be transmitted are punctured, that is, a puncturing (puncturing) manner is used. As shown in FIG. 8A, a white area is punctured, that is, is not sent. If a position of a punctured PBCH RE is fixed, for example, only a PBCH RE with a high-order RE index value is punctured, or only a PBCH RE with a low-order RE index value is punctured, some coded bits are always fixedly punctured, demodulation performance of the PBCH is affected, and access of the UE to a cell is affected. Therefore, demodulation needs to be performed together with the second PBCH.

S640: The UE determines the first physical resource.

For the first physical resource, refer to the foregoing descriptions. Details are not described herein again.

In a possible implementation, the UE determines the first physical resource according to a predefined rule or a prestored rule. The predefined rule or the rule prestored in the UE indicates the first physical resource.

In another possible implementation, the first physical resource is determined based on a first frequency domain pattern or a first RE pattern. The UE determines the first physical resource based on the first frequency domain pattern or the first RE pattern. For the first frequency domain pattern, refer to the foregoing descriptions. Details are not described herein again.

Optionally, S640 includes: The UE determines a physical resource that is in the first physical resource and that is used to transmit the first PBCH, and a physical resource that is in the first physical resource and that is used to transmit the first PBCH DMRS. The first PBCH DMRS occupies one of every K subcarriers in frequency domain. K is a positive integer. For example, K is 4. The first PBCH occupies a subcarrier other than the first PBCH DMRS in the first physical resource in frequency domain.

S650: The network device sends the first PBCH. Correspondingly, the UE receives the first PBCH. The first PBCH is located in the first physical resource.

The network device sends the first PBCH and the first PBCH DMRS on the first physical resource. Correspondingly, the UE receives the first PBCH and the first PBCH DMRS on the first physical resource.

S660: The UE obtains the system information carried by the first PBCH.

For details about the system information carried by the first PBCH, refer to the descriptions in S610. Details are not described herein again.

For example, S660 includes: The UE performs an inverse OFDM operation, demapping, demodulation, descrambling, decoding, and the like on the first PBCH, to obtain the system information. In an implementation, with reference to the first implementation in S620, when the UE performs decoding or coding on received first PBCH data, because the quantity of coded bits of the first PBCH is determined based on the first frequency domain pattern or the first RE pattern, all the coded bits of the first PBCH can be received, and the UE performs decoding based on the received first PBCH data. If the decoding succeeds, the UE may obtain uncoded bits of the PBCH, and then obtain the system information from the obtained uncoded bits. In another implementation, with reference to the second implementation in S620, when the UE decodes or decodes received first PBCH data, because the quantity of coded bits of the first PBCH is determined based on the second frequency domain pattern or the second RE pattern, only coded bits of the PBCH that are transmitted on the first physical resource can be received, and coded bits of the PBCH that are transmitted on a resource other than the first physical resource cannot be received. In a possible implementation method, likelihood information of this part of coded bits may be considered as 0 during decoding. Therefore, the UE can perform decoding based only on the received first PBCH data. If the decoding succeeds, the UE may obtain uncoded bits of the PBCH, and then obtain the system information from the obtained uncoded bits.

The UE correctly receives the system information carried by the first PBCH, to complete a cell search and synchronization process. Specifically, the UE obtains, by receiving the MIB, configuration information that is included in the MIB and that is required for interpreting the system information block Type1 (system information block Type 1, SIB1) message. For example, the configuration information may include a control resource set (control resource set, Coreset), a search space (search space, SS), and the like that correspond to the SIB1. The SIB1 is obtained based on configuration information corresponding to the SIB1. The SIB1 may include configuration information required by the terminal device to access a system. The UE may implement system access, cell selection, uplink synchronization, and the like based on the SIB 1.

For a bandwidth of the narrowband system, for example, 3 MHz to 5 MHz, the existing PBCH may fail to be transmitted. In this embodiment of this application, the first PBCH occupies less than 240 subcarriers in frequency domain. In this way, PBCH transmission in the narrowband system can be enabled. In this solution, the first frequency domain pattern or the first RE pattern is a part of the second frequency domain pattern or the second RE pattern, that is, a plurality of different patterns are not introduced for a broadband system and the narrowband system. Therefore, the system may adaptively configure an appropriate pattern based on the system bandwidth, and compatibility is good. In addition, for a terminal device having both narrowband access and broadband access capabilities, complexity is low. Further, when the payload of the first PBCH decreases, a bit rate can be reduced, thereby helping improve performance of the first PBCH.

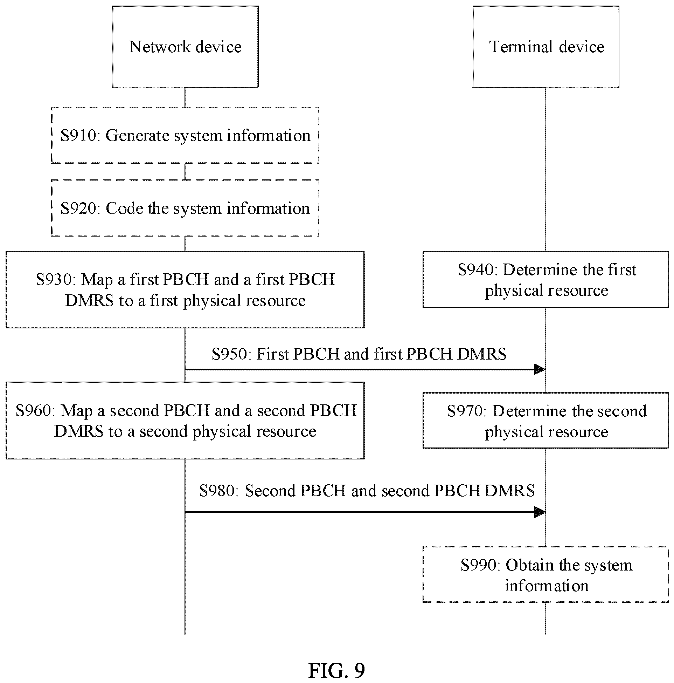

FIG. 9 is a schematic flowchart of a communication method according to an embodiment of this application. Steps shown in FIG. 9 are described below. It should be noted that steps represented by dashed lines in FIG. 9 are optional. Details are not described below. In this embodiment of this application, a first PBCH and a second PBCH carry same system information. Therefore, UE performs combination processing on the first PBCH and the second PBCH, so that a probability of successfully receiving the system information can be increased.

S910: A network device generates system information.

The system information is the system information carried by the first PBCH. For details, refer to the descriptions in S610. Details are not described herein again. The first PBCH and the second PBCH carry the same system information. In other words, the system information is also the system information carried by the second PBCH.

S920: The network device codes the system information.

Coded bits of the first PBCH are bits obtained by coding the system information. Coded bits of the second PBCH are bits obtained by coding the system information. For details about the coding in S920, refer to the descriptions in S620. Details are not described herein again.

Optionally, the coded bits of the first PBCH and the second PBCH are the same, that is, coding schemes of the first PBCH and the second PBCH are the same. For example, both a quantity of coded bits of the first PBCH and a quantity of coded bits of the second PBCH are determined based on a first frequency domain pattern or a first RE pattern. For details, refer to the first possible implementation in S620. Details are not described herein again. For another example, both a quantity of coded bits of the first PBCH and a quantity of coded bits of the second PBCH are determined based on a second frequency domain pattern or a second RE pattern. For details, refer to the second possible implementation in S620. Details are not described herein again.

S930: The network device maps the first PBCH to a first physical resource.

For details, refer to the descriptions in S630. Details are not described herein again.

S940: The UE determines the first physical resource.

For details, refer to the descriptions in S640. Details are not described herein again.

S950: The network device sends the first PBCH. Correspondingly, the UE receives the first PBCH. The first PBCH is located in the first physical resource.

For details, refer to the descriptions in S650. Details are not described herein again.

S960: The network device maps the second PBCH to a second physical resource.

For the second physical resource, refer to the foregoing descriptions. Details are not described herein again.

A second PBCH DMRS is a reference signal for demodulating the second PBCH. Therefore, the step further includes: The network device maps the second PBCH DMRS to the second physical resource. In other words, S630 includes: The network device maps the second PBCH to a physical resource that is in the second physical resource and that is used to transmit the second PBCH; and the network device maps the second PBCH DMRS to a physical resource that is in the second physical resource and that is used to transmit the second PBCH DMRS.

Step S960 is a step of generating the second PBCH or the second PBCH DMRS by the network device. For details, refer to the descriptions in S630. The "first PBCH" is replaced with the "second PBCH", and the "first PBCH DMRS" is replaced with the "second PBCH DMRS". Details are not described herein again.

This embodiment of this application includes the following four manners:

Manner 1: Both the quantity of coded bits of the first PBCH and the quantity of coded bits of the second PBCH are determined based on the first frequency domain pattern or the first RE pattern, and both the first physical resource and the second physical resource are determined based on the first frequency domain pattern or the first RE pattern. In this case, rate matching is performed on the first PBCH and the second PBCH in a narrowband system, so that a problem that an existing PBCH cannot be sent in a narrowband can be resolved. The UE combines the first PBCH and the second PBCH. In this way, transmission performance of the system information can be improved, and a probability that the UE accesses a cell is increased.

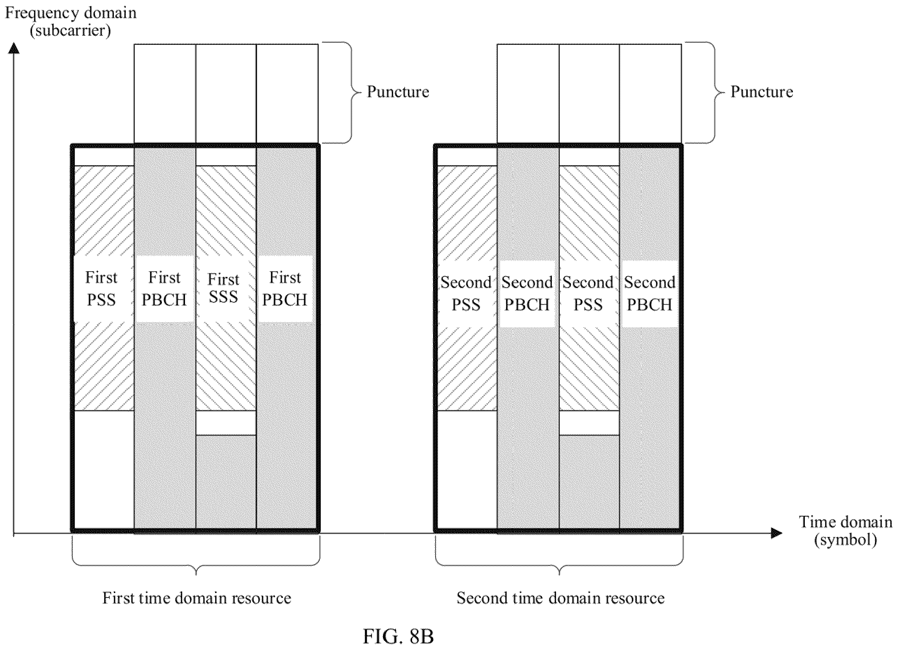

Manner 2: Both the quantity of coded bits of the first PBCH and the quantity of coded bits of the second PBCH are determined based on the second frequency domain pattern or the second RE pattern, but both the first physical resource and the second physical resource are determined based on the first frequency domain pattern or the first RE pattern. In this case, rate matching is performed on the first PBCH and the second PBCH in a narrowband system based on a physical resource of an existing PBCH, but the first PBCH and the second PBCH are mapped to the first physical resource and the second physical resource respectively. Because a quantity of first physical resources and a quantity of second physical resources are less than a quantity of physical resources of the existing PBCH, coded bits of the first PBCH and coded bits of the second PBCH that cannot be transmitted are punctured, that is, a puncturing manner is used. As shown in FIG. 8B, a position of a punctured RE in the first PBCH is the same as that in the second PBCH. Consequently, a same coded bit is fixedly punctured, a demodulation performance loss of the PBCH is large, and access of the UE to a cell is affected. To resolve a problem in Manner 2, Manner 3 and Manner 4 are introduced.

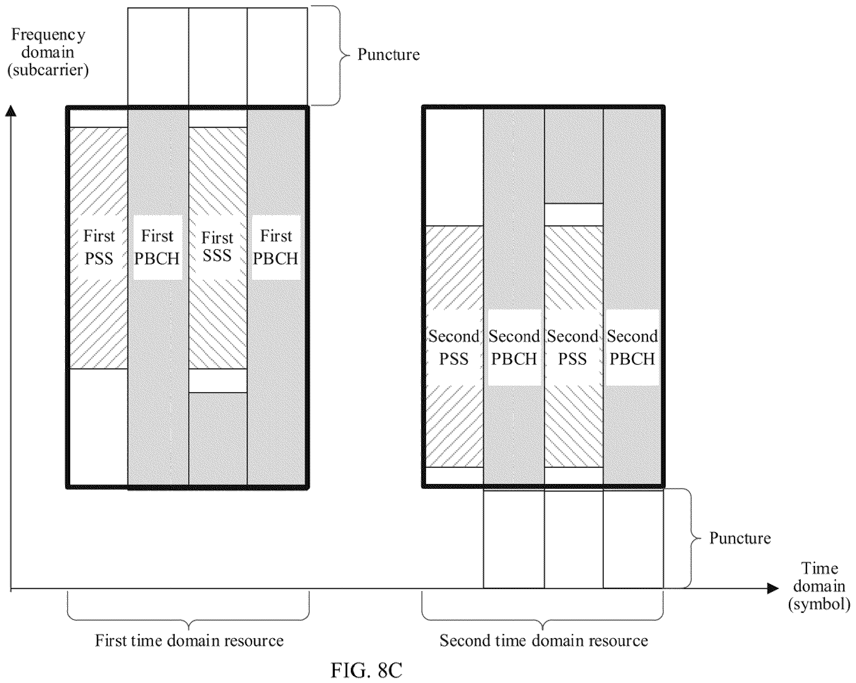

Manner 3: Both the quantity of coded bits of the first PBCH and the quantity of coded bits of the second PBCH are determined based on the second frequency domain pattern or the second RE pattern, but the first physical resource is determined based on the first frequency domain pattern or the first RE pattern, and the second physical resource is determined based on a third frequency domain pattern or a third RE pattern. For the third frequency domain pattern or the third RE pattern, refer to the foregoing descriptions. Details are not described herein again. As shown in FIG. 8C, a position of a punctured RE in the first PBCH is different from that in the second PBCH, that is, coded bits transmitted on the first PBCH and the second PBCH are different. The UE combines the first PBCH and the second PBCH, to obtain a larger coding gain. In this way, transmission performance of the system information is improved, and a probability that the UE accesses a cell is increased.

Manner 4: Both the quantity of coded bits of the first PBCH and the quantity of coded bits of the second PBCH are determined based on the second frequency domain pattern or the second RE pattern, and both the first physical resource and the second physical resource are determined based on the first frequency domain pattern or the first RE pattern. However, the first PBCH is sequentially mapped in ascending order of subcarrier indexes, and the second PBCH is sequentially mapped in descending order of subcarrier indexes; or the second PBCH is sequentially mapped in ascending order of subcarrier indexes, and the first PBCH is sequentially mapped in descending order of subcarrier indexes. In other words, the network device maps, in ascending order of the subcarrier indexes, the first PBCH to the physical resources that are in the first physical resource and that are used to transmit the first PBCH, and the network device maps, in descending order of the subcarrier indexes, the second PBCH to the physical resources that are in the second physical resource and that are used to transmit the second PBCH; and vice versa. In this way, coded bits transmitted on the first PBCH and the second PBCH are different. The UE combines the first PBCH and the second PBCH, to obtain a larger coding gain. In this way, transmission performance of the system information is improved, and a probability that the UE accesses a cell is increased.

S970: The UE determines the second physical resource.

For details, refer to the descriptions in S640. "First" is replaced with "second". Details are not described herein again.

S980: The network device sends the second PBCH. Correspondingly, the UE receives the second PBCH. The second PBCH is located in the second physical resource.

For details, refer to the descriptions in S550. "First" is replaced with "second. Details are not described herein again.

S990: The UE obtains the system information.

For details about the system information, refer to the descriptions in S610. Details are not described herein again.

The UE obtains the system information based on the first PBCH and the second PBCH. For example, the UE performs combined detection on the received first PBCH and second PBCH, to obtain the system information. In an implementation, the UE separately demodulates the received first PBCH and second PBCH to obtain likelihood information of the coded bits carried by the two PBCHs, combines the obtained likelihood information of the coded bits carried by the two PBCHs before performing decoding, and then performs decoding based on the combined likelihood information of the coded bits of the PBCHs. If the decoding is correct, the UE may obtain uncoded bits, and then obtain corresponding system information from the obtained uncoded bits. The coding and the decoding respectively mean channel coding and channel decoding.

For a bandwidth of the narrowband system, for example, 3 MHz to 5 MHz, the existing PBCH may fail to be transmitted. In this embodiment of this application, the first PBCH and the second PBCH occupy less than 240 subcarriers in frequency domain. In this way, PBCH transmission in the narrowband system can be enabled. In addition, the UE performs combination processing on the first PBCH and the second PBCH. In this way, transmission performance of the system information can be improved, and a probability of successfully accessing a cell can be increased. Further, when a quantity of bits of the system information decreases, and a bit rate can be reduced, thereby helping improve performance of the first PBCH.

It should be noted that, in various embodiments of this application, sequence numbers of the foregoing processes do not mean execution sequences. The execution sequences of the processes should be determined based on functions and internal logic of the processes. Various numeric numbers or sequence numbers involved in the foregoing processes are merely used for differentiation for ease of description, and should not constitute any limitation on an implementation process of embodiments of this application. For example, S640 and S630/S620/S610 may be performed simultaneously, or S640 may be performed before or after S630/S620/S610. For example, S970 and S960 may be performed simultaneously, or S970 or S960 may be a previous step.

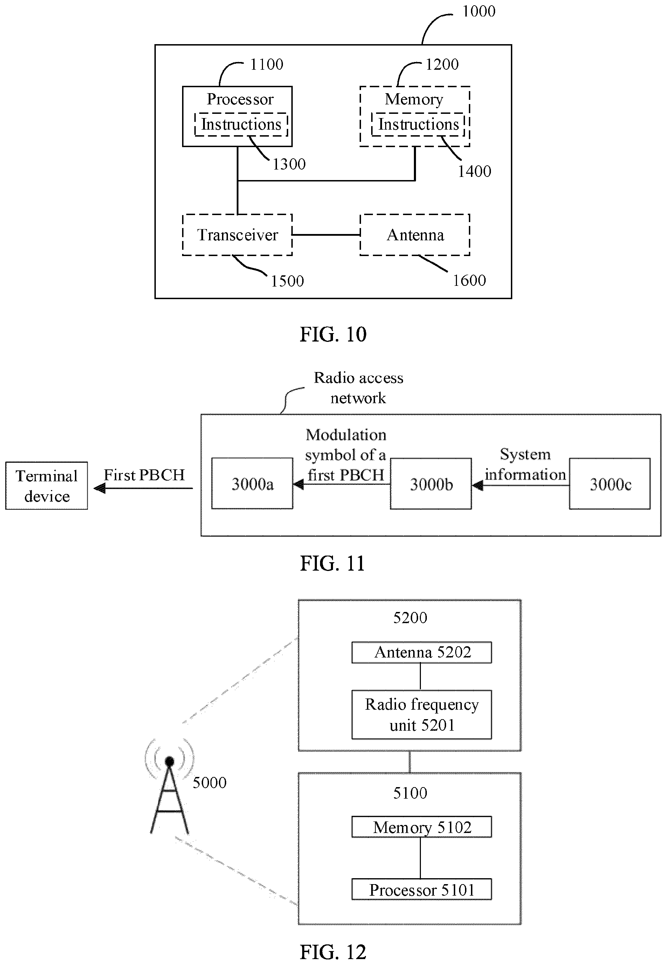

FIG. 10 is a schematic diagram of a structure of a communication apparatus according to an embodiment of this application. It should be noted that a part represented by a dashed box in FIG. 10 is optional. Details are not described below.

A communication apparatus 3000 includes one or more processors 3100. The processor 3100 may be configured to perform internal processing of the apparatus, to implement a specific control processing function. Optionally, the processor 3100 includes an instruction 3110. Optionally, the processor 3100 may store data. Optionally, the processor 3100 may be a general-purpose processor, an application-specific processor, or the like. For example, the communication apparatus 3000 includes at least one of the following processors: a central processing unit (central processing unit, CPU), a digital signal processor (digital signal processor, DSP), a baseband processor, a modem processor, a transceiver processor, an application processor, an image signal processor, a video codec processor, a controller, a microprocessor, a microcontroller, a system-on-a-chip (system-on-a-chip, SoC) processor, and/or a neural network processor. Optionally, different processors may be independent components, may be located in different physical positions, or may be located in different integrated circuits. Optionally, different processors may be integrated into one or more processors, for example, may be integrated into one or more integrated circuits.

Optionally, the communication apparatus 3000 includes one or more memories 3200, and is configured to store an instruction 3210. Optionally, the memory 3200 may further store data. The processor and the memory may be separately disposed, or may be integrated together.

Optionally, the communication apparatus 3000 may further include a transceiver 3300 and/or an antenna 3400. The transceiver 3000 may be configured to send information to another apparatus or receive information from the another apparatus. The transceiver 3300 may be referred to as a transceiver, a transceiver circuit, an input/output interface, or the like, and is configured to implement a transceiver function of the communication apparatus 3000 by using the antenna 3400. Optionally, the transceiver 3300 includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

Optionally, the communication apparatus 3000 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display screen, or the like. These components may be implemented by hardware, software, or a combination of software and hardware.

The processor 3100 executes the instruction stored in the communication apparatus 3000, that is, the instruction stored in the communication apparatus may be run on the processor 3100, so that the communication apparatus 3000 performs the method described in the foregoing embodiments. Optionally, the instruction is the instruction 3110 in the processor, or the instruction is the instruction 3210 in the memory.

In embodiments of this application, the instruction may also be a computer program, code, program code, a program, an application program, software, or an executable file. For example, a computer program or code stored in the communication apparatus 3000. Details are not described again in other parts.

In a first implementation, the communication apparatus 3000 may be configured to implement the method corresponding to the terminal device in the foregoing embodiments of this application. For a specific function, refer to the descriptions in the foregoing embodiments.

For example, the communication apparatus 3000 includes the processor 3100, and the processor 3100 is configured to execute the computer program or the instructions, so that the method corresponding to the terminal device in the foregoing embodiments of this application is performed.

Optionally, the method corresponding to the terminal device in the foregoing embodiments of this application includes: determining a first physical resource, where the first physical resource is a physical resource to which a first PBCH and a first PBCH DMRS are mapped; and receiving the first PBCH and the first PBCH DMRS, where the first PBCH is a PBCH in a first SSB, and the first SSB occupies four symbols in time domain and occupies X subcarriers in frequency domain, where X is a positive integer less than 240.

Optionally, the method corresponding to the terminal device in the foregoing embodiments of this application includes: determining a first physical resource based on a first frequency domain pattern or a first resource element RE pattern, where the first frequency domain pattern or the first RE pattern is a part of a second frequency domain pattern or a second RE pattern; and receiving a first PBCH, where the first PBCH is located in the first physical resource.

Optionally, the method corresponding to the terminal device in the foregoing embodiments of this application includes: receiving the first PBCH; and obtaining system information carried by the first PBCH, where a quantity of bits of the system information is less than 32.

In a second implementation, the communication apparatus 3000 may be configured to implement the method corresponding to the network device in the foregoing embodiments of this application. For a specific function, refer to the descriptions in the foregoing embodiments.

For example, the communication apparatus 3000 includes the processor 3100, and the processor 3100 is configured to execute the computer program or the instructions, so that the method corresponding to the network device in the foregoing embodiments of this application is performed.

Optionally, the method corresponding to the network device in the foregoing embodiments of this application includes: mapping a first PBCH to a first physical resource; and sending the first PBCH, where the first PBCH is a PBCH in a first SSB, and the first SSB occupies four symbols in time domain and occupies X subcarriers in frequency domain, where X is a positive integer less than 240.

Optionally, the method corresponding to the network device in the foregoing embodiments of this application includes: mapping a first PBCH to a first physical resource based on a first frequency domain pattern or a first resource element RE pattern, where the first frequency domain pattern or the first RE pattern is a part of a second frequency domain pattern or a second RE pattern; and sending the first PBCH, where the first PBCH is located in the first physical resource.

Optionally, the method corresponding to the network device in the foregoing embodiments of this application includes: generating system information carried by the first PBCH, where a quantity of bits of the system information is less than 32; and sending the first PBCH.

In a third implementation, the communication apparatus 3000 is a functional entity (which may also be referred to as a functional unit, a logical network element, or the like) in the network device, and may implement some physical layer functions and radio frequency functions in the network device. For ease of description, the communication apparatus 3000 in the third implementation is denoted as the communication apparatus 3000a. The communication apparatus 3000a may be a network element in a hardware device, a software function running on dedicated hardware, or a virtualized function instantiated on a platform (for example, a cloud platform).

The communication apparatus 3000a includes one or more processors 3100, and further includes a transceiver 4300 and/or an antenna 4400. Optionally, the communication apparatus 3000a further includes one or more memories 3200, and is configured to store instructions. The processor 3100 is a transceiver processor. Optionally, the transceiver processor includes a sending processor and a receiving processor. The transceiver processor may implement signal processing related to the physical layer function and the radio frequency function. Optionally, a physical layer is a lower layer in the physical layer. For example, a lower layer function in the physical layer includes precoding, physical resource mapping, physical antenna mapping, and/or inverse fast Fourier transformation (inverse fast Fourier transformation, IFFT). For example, the lower layer function in the physical layer includes physical resource demapping, physical antenna demapping, and/or fast Fourier transformation (fast Fourier transformation, FFT). It should be noted that function division of a higher layer and the lower layer in the physical layer is not limited in embodiments of this application.

For example, the communication apparatus 3000a includes the processor 3100, and the processor 3100 is configured to execute the computer program or the instructions, so that the method corresponding to the network device in the foregoing embodiments of this application is performed. As shown in FIG. 11, a communication apparatus 3000a and a terminal device may communicate with each other.

Optionally, the method corresponding to the network device in the foregoing embodiments of this application includes: mapping a first PBCH to a first physical resource; and sending the first PBCH to the terminal device, where the first PBCH is a PBCH in a first SSB, and the first SSB occupies four symbols in time domain and occupies X subcarriers in frequency domain, where X is a positive integer less than 240.

Optionally, the method corresponding to the network device in the foregoing embodiments of this application includes: mapping a first PBCH to a first physical resource based on a first frequency domain pattern or a first resource element RE pattern, where the first frequency domain pattern or the first RE pattern is a part of a second frequency domain pattern or a second RE pattern; and sending the first PBCH to the terminal device, where the first PBCH is located in the first physical resource.

In a fourth implementation, the communication apparatus 3000 is a functional entity (which may also be referred to as a functional unit, a logical network element, or the like) in the network device, and may implement some functions (for example, DU functions) of the network device. For ease of description, the communication apparatus 3000 in the fourth implementation is denoted as the communication apparatus 3000b. The communication apparatus may be a network element in a hardware device, a software function running on dedicated hardware, or a virtualized function instantiated on a platform (for example, a cloud platform).

The communication apparatus 3000b includes one or more processors 3100, and further includes one or more memories 3200, but does not include a transceiver 3300 or an antenna 3400. The communication apparatus 3000b may include functions of a physical layer, media access control (Media Access Control, MAC), and radio link control (radio link control, RLC). The processor 3100 may implement signal processing related to the functions of MAC, RLC, and the physical layer. Optionally, a physical layer is a higher layer in the physical layer. For example, functions of the higher layer in the physical layer may include channel coding, scrambling, modulation, and/or layer mapping. For example, the functions of the higher layer in the physical layer may include channel decoding, descrambling, demodulation, and/or layer demapping.

As shown in FIG. 11, the communication apparatus 3000b and the communication apparatus 3000a may communicate with each other. The communication apparatus 3000a is a functional entity in the network device, and includes a radio frequency function and some physical layer functions. For specific descriptions, refer to the foregoing descriptions. Details are not described herein again.

For example, the communication apparatus 3000b includes the processor 3100, and the processor 3100 is configured to execute the computer program or the instructions, so that method 1, method 2, or method 3 is performed. For specific descriptions, refer to the foregoing embodiments.

Optionally, the method 1 includes: coding and modulating system information carried by a first PBCH; and sending a modulation symbol of the first PBCH to the communication apparatus 3000a, where the first PBCH is a PBCH in a first SSB, and the first SSB occupies four symbols in time domain and occupies X subcarriers in frequency domain, where X is a positive integer less than 240.

Optionally, the method 2 includes: coding and modulating, based on a first frequency domain pattern or a first RE pattern, system information carried by a first PBCH; and sending a modulation symbol of the first PBCH to the communication apparatus 3000a, where the first frequency domain pattern or the first RE pattern is a part of a second frequency domain pattern or a second RE pattern.

Optionally, the method 3 includes: coding and modulating system information carried by a first PBCH; and sending a modulation symbol of the first PBCH to the communication apparatus 3000a, where a quantity of bits of the system information is less than 32.

In a fifth implementation, the communication apparatus 3000 is a functional entity (which may also be referred to as a functional unit, a logical network element, or the like) in the network device, and may implement some functions (for example, CU functions) of the network device. For ease of description, the communication apparatus 3000 in the fourth implementation is denoted as the communication apparatus 3000c.

The communication apparatus 3000c includes one or more processors 3100, and further includes one or more memories 3200, but does not include a transceiver 3300 or an antenna 3400. The communication apparatus may include functions of the packet data convergence protocol (packet data convergence protocol, PDCP) and an RRC. The processor 3100 may implement signal processing related to the PDCP function and the RRC function.

As shown in FIG. 11, the communication apparatus 3000c and the communication apparatus 3000b may communicate with each other. The communication apparatus 3000b is a functional entity in the network device, and includes MAC, RLC, and some physical layer functions. For specific descriptions, refer to the foregoing descriptions. Details are not described herein again.

For example, the communication apparatus 3000c includes the processor 3100, and the processor 3100 is configured to execute the computer program or the instructions, so that the method 1 or the method 2 is performed. For specific descriptions, refer to the foregoing embodiments.

Optionally, the method 1 includes: generating system information carried by a first PBCH; and sending the system information to the communication apparatus 3000b, where the first PBCH is a PBCH in a first SSB, and the first SSB occupies four symbols in time domain and occupies X subcarriers in frequency domain, where X is a positive integer less than 240.

Optionally, the method 2 includes: generating system information carried by a first PBCH; and sending the system information to the communication apparatus 3000b, where a quantity of bits of the system information is less than 32.

The processor 3100 and the transceiver 3300 described in this application may be implemented on an integrated circuit (integrated circuit, IC), an analog IC, a radio frequency integrated circuit (radio frequency identification, RFID), a mixed-signal IC, an application-specific integrated circuit (application-specific integrated circuit, ASIC), a printed circuit board (printed circuit board, PCB), an electronic device, or the like. The communication apparatus described in this specification may be implemented by an independent device (for example, an independent integrated circuit or a mobile phone), or may be a part of a larger device (for example, a module that can be embedded into another device). For details, refer to the foregoing descriptions of the terminal device and the network device. Details are not described herein again.

FIG. 12 is a schematic diagram of a simplified structure of a network device according to an embodiment of this application, for example, may be a schematic diagram of a simplified structure of a base station. The network device 5000 may be used in the system shown in FIG. 1, and performs operations or functions of the network device in the foregoing method embodiments. For details, refer to the descriptions in the foregoing method embodiments. Details are not described herein again.

The network device 5000 includes a processor 5101, a memory 5102, a radio frequency unit 5201, and an antenna 5202. The processor 2101 is configured to support the network device in performing the functions of the network device in the foregoing method embodiments. The processor 5101 may be one or more processors. The one or more processors may support radio access technologies of a same standard, or may support radio access technologies (for example, LTE and NR) of different standards. In an implementation, the processor 5101 is an integrated circuit, for example, one or more ASICs, one or more DSPs, one or more FPGAs, or a combination of these types of integrated circuits. These integrated circuits may be integrated together to form a chip. The memory 5102 is also referred to as a storage unit, and is configured to store instructions and/or data. The memory 5102 may be a memory, or may be a general term of a plurality of memories or storage elements. The memory 5102 and the processor 5101 may be located in a same chip or in different chips. The radio frequency unit 5201 may be one or more radio frequency units. The antenna 5202 is mainly configured to receive and send radio frequency signals in a form of an electromagnetic wave. For example, the antenna 5202 is used by the network device 5000 to send a signal to the terminal device or receive a signal form the terminal device.

Optionally, a baseband unit 5100 (baseband unit, BBU) includes the processor 5101 and the memory 5102, and is mainly configured to: perform baseband processing of a signal, manage a radio resource, provide transmission management and an interface, provide a clock signal, and other functions. Optionally, the BBU 5100 may include one or more boards, and a plurality of boards may jointly support a radio access network (such as an LTE network) of a single access standard, or may separately support radio access networks (such as an LTE network, a 5G network, or another networks) of different access standards. The memory 5101 and the processor 5102 may serve one or more boards. In other words, a memory and a processor may be disposed on each board. Alternatively, a plurality of boards may share a same memory and a same processor. In addition, a necessary circuit may further be disposed on each board.

Optionally, a transceiver unit 5200 includes the radio frequency unit 5201 and the antenna 5202, and is mainly configured to: receive and send radio frequency signals and perform conversion between the radio frequency signal and a baseband signal.

Optionally, the radio frequency unit 5201 is a remote radio unit (remote radio unit, RRU), and the RRU and the BBU may be physically disposed together, or may be physically disposed separately, that is, a distributed base station.

Optionally, the transceiver unit 5200 may be an active antenna unit (Active Antenna Unit, AAU), that is, a hardware product in which a radio frequency function and an antenna are integrated together. The radio frequency unit 5201 in the AAU means a radio frequency module dedicated to the AAU, and has the same functions as the RRU. Optionally, the AAU may further include some baseband processing functions.

Optionally, the BBU 5100 may be configured to perform an action that is implemented inside the network device and that is described in the foregoing method embodiments, and the transceiver unit 5200 may be configured to perform an action that is sent by the network device to the terminal device or received from the terminal device and that is described in the foregoing method embodiments. For specific descriptions, refer to the foregoing method embodiments. Details are not described herein again.

For example, the network device 5000 includes the processor 5101, and the processor 5101 is configured to execute a computer program or instructions, so that the method corresponding to the network device in the foregoing embodiments of this application is performed.

Optionally, the method corresponding to the network device in the foregoing embodiments of this application includes: mapping a first PBCH to a first physical resource; and sending the first PBCH, where the first PBCH is a PBCH in a first SSB, and the first SSB occupies four symbols in time domain and occupies X subcarriers in frequency domain, where X is a positive integer less than 240.

Optionally, the method corresponding to the network device in the foregoing embodiments of this application includes: mapping a first PBCH to a first physical resource based on a first frequency domain pattern or a first resource element RE pattern, where the first frequency domain pattern or the first RE pattern is a part of a second frequency domain pattern or a second RE pattern; and sending the first PBCH, where the first PBCH is located in the first physical resource.

Optionally, the method corresponding to the network device in the foregoing embodiments of this application includes: generating system information carried by the first PBCH, where a quantity of bits of the system information is less than 32; and sending the first PBCH.

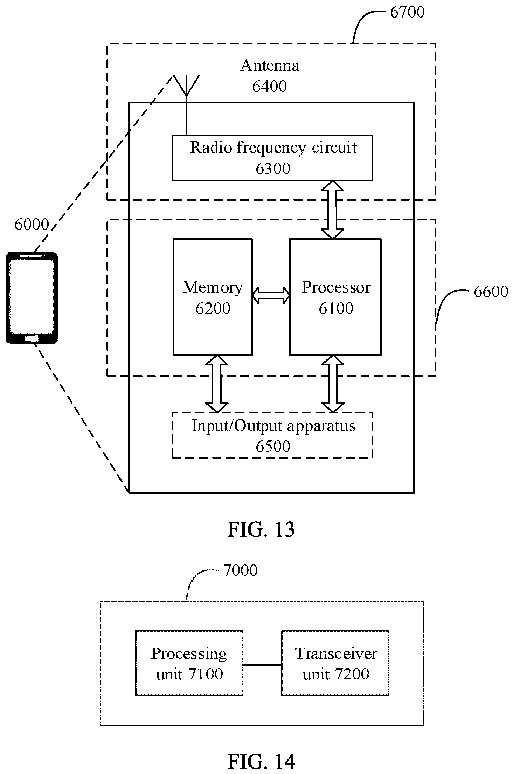

FIG. 13 is a schematic diagram of a simplified structure of a terminal device according to an embodiment of this application. The terminal device 6000 may be used in the system shown in FIG. 1, and performs operations or functions of the terminal device in the foregoing method embodiments. For details, refer to the descriptions in the foregoing method embodiments. Details are not described herein again.

The terminal device 6000 includes a processor 6100, a memory 6200, a radio frequency circuit 6300, and an antenna 6400. The processor 6100 is mainly configured to: process a communication protocol and communication data, control a terminal, execute instructions, process data, and the like. The processor 6100 may also be referred to as a processing unit, a processing board, a processing module, a processing apparatus, or the like. The memory 6200 is mainly configured to store instructions (which may also be referred to as a computer program or code sometimes) and data. The memory may also be referred to as a storage medium, a storage device, or the like. The radio frequency circuit 6300 is mainly configured to: perform conversion between a baseband signal and a radio frequency signal, and process the radio frequency signal. The antenna 6400 is mainly configured to receive and send radio frequency signals in a form of an electromagnetic wave. For example, the antenna 6400 is used by the terminal device 6000 to send a signal to the network device or receive a signal from the network device. Optionally, the terminal device 6000 further includes an input/output apparatus 6500, for example, a touchscreen, a display screen, a microphone, and a keyboard, and is mainly configured to: receive data input by a user, and output data output by the user. It should be noted that FIG. 13 shows only one memory and one processor. In an actual terminal product, the terminal device 6000 may include a plurality of processors and/or a plurality of memories.

For example, the terminal device 6000 is a mobile phone. After the terminal device 6000 is powered on, the processor 6100 may read software program in the memory 6200, explain and execute instructions of the software program, and process data of the software program. When data needs to be sent wirelessly, the processor 6100 performs baseband processing on to-be-sent data, and then outputs a baseband signal to a radio frequency circuit 6300. The radio frequency circuit 6300 performs radio frequency processing on the baseband signal, and then sends, through the antenna 6400, a radio frequency signal in a form of an electromagnetic wave. When data is sent to the terminal device 6000, the radio frequency circuit 6300 receives the radio frequency signal through the antenna 6400, converts the radio frequency signal into a baseband signal, and outputs the baseband signal to the processor 6100. The processor 6100 converts the baseband signal into data, and processes the data.

In an implementation, the processor 6100 may include a baseband processor and a central processing unit. The baseband processor is mainly configured to process the communication protocol and the communication data. The central processing unit is mainly configured to: control the entire terminal device 6000, execute the software program, and process the data of the software program. The terminal device 6000 may include a plurality of baseband processors to adapt to different network standards, the terminal device 6000 may include a plurality of central processing units to enhance a processing capability of the terminal device 6000, and components of the terminal device 6000 may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an implementation, the processor 6100 and the memory 6200 may be considered as a processing apparatus 6600 of the terminal device 6000. The processing apparatus 6600 may be a chip. For example, the processing apparatus 6600 may be a general-purpose processor, a DSP, an ASIC, a field programmable gate array (field programmable gate array, FPGA), another programmable logic device, a discrete gate, a transistor logic device, a discrete hardware component, a system on chip (system on chip, SoC), a CPU, a network processor (network processor, NP), a micro controller unit (micro controller unit, MCU), a programmable logic device (programmable logic device, PLD), or another integrated chip.

In an implementation, the radio frequency circuit 6300 and the antenna 6400 may be considered as a transceiver unit 6700 of the terminal device 6000. The transceiver unit 6700 may also be referred to as a transceiver, a transceiver machine, a transceiver apparatus, or the like. Optionally, a component that is of the transceiver unit and that is configured to implement a receiving function may be considered as a receiving unit, and a component that is of the transceiver unit and that is configured to implement a sending function may be considered as a sending unit. For example, the receiving unit may also be referred to as a receiver, a receive machine, or a receiving circuit, and the sending unit may also be referred to as a transmitter, a transmit machine, or a transmitting circuit.

The processing apparatus 6600 may be configured to perform an action that is implemented inside the terminal device and that is described in the foregoing method embodiments, and the transceiver unit 6700 may be configured to perform an action that is sent by the terminal device to the network device or received from the network device and that is described in the foregoing method embodiments. For specific descriptions, refer to the foregoing method embodiments.

Details are not described herein again.

For example, the terminal device 6000 includes the processor 6100, and the processor 6100 is configured to execute a computer program or instructions, so that the method corresponding to the terminal device in the foregoing embodiments of this application is performed.

Optionally, the method corresponding to the terminal device in the foregoing embodiments of this application includes: determining a first physical resource, where the first physical resource is a physical resource to which a first PBCH is mapped; and receiving the first PBCH, where the first PBCH is located in the first physical resource, the first PBCH is a PBCH in a first SSB, and the first SSB occupies four symbols in time domain and occupies X subcarriers in frequency domain, where X is a positive integer less than 240.

Optionally, the method corresponding to the terminal device in the foregoing embodiments of this application includes: determining a first physical resource based on a first frequency domain pattern or a first resource element RE pattern, where the first frequency domain pattern or the first RE pattern is a part of a second frequency domain pattern or a second RE pattern; and receiving a first PBCH, where the first PBCH is located in the first physical resource.

Optionally, the method corresponding to the terminal device in the foregoing embodiments of this application includes: receiving the first PBCH; and obtaining system information carried by the first PBCH, where a quantity of bits of the system information is less than 32.

It should be understood that, in embodiments of this application, the terminal device and/or the network device may perform some or all of the steps in embodiments of this application. These steps or operations are merely examples. In embodiments of this application, other operations or variants of operations may be further performed. In addition, the steps may be performed in a sequence different from a sequence presented in embodiments of this application, and not all the operations in embodiments of this application are necessarily to be performed.

FIG. 14 is a schematic diagram of a structure of a communication apparatus according to an embodiment of this application.

The communication apparatus 7000 includes a processing unit 7100 and a transceiver unit 7200. The processing unit 7100 may also be referred to as a processing module, and the transceiver unit 7200 may also be referred to as a transceiver module. The processing unit 7100 may be implemented by a processor or a processor-related circuit component. The transceiver unit 7200 may be a function module, and can implement both a sending operation and a receiving operation. For example, when a sending operation is performed, it may be considered that the transceiver unit is a sending unit, and when a receiving operation is performed, it may be considered that the transceiver unit is a receiving unit. Optionally, the transceiver unit 7200 may also be two function modules, including a sending unit and a receiving unit. Optionally, the communication apparatus is a chip system, the transceiver unit may be an input/output interface of a chip (for example, a baseband chip), and the processing unit may be a processor of the chip system.

In a first possible implementation, the communication apparatus 7000 is a terminal device, and is used in a chip in the terminal device, or another combined component, component, or the like that has a function of the terminal device.

For example, the processing unit 7100 is configured to determine a first physical resource; and the transceiver unit 7200 is configured to receive a first PBCH, where the first physical resource is a physical resource to which the first PBCH is mapped, the first PBCH is a PBCH in a first SSB, and the first SSB occupies four symbols in time domain and occupies X subcarriers in frequency domain, where X is a positive integer less than 240.

For example, the processing unit 7100 is configured to determine a first physical resource based on a first frequency domain pattern or a first resource element RE pattern; and the transceiver unit 7200 is configured to receive the first PBCH, where the first frequency domain pattern or the first RE pattern is a part of a second frequency domain pattern or a second RE pattern.

For example, the transceiver unit 7200 is configured to receive the first PBCH; and the processing unit 7100 is configured to obtain system information carried by the first PBCH, where a quantity of bits of the system information is less than 32.

In a second possible implementation, the communication apparatus 7000 is a network device, and is used in a chip in the network device, or another combined component, component, or the like that has a function of the network device.

For example, the processing unit 7100 is configured to map a first PBCH to a first physical resource; and the transceiver unit 7200 is configured to send the first PBCH, where the first PBCH is a PBCH in a first SSB, and the first SSB occupies four symbols in time domain and occupies X subcarriers in frequency domain, where X is a positive integer less than 240.

For example, the processing unit 7100 is configured to map a first PBCH to a first physical resource based on a first frequency domain pattern or a first resource element RE pattern; and the transceiver unit 7200 is configured to send the first PBCH, where the first frequency domain pattern or the first RE pattern is a part of a second frequency domain pattern or a second RE pattern.

For example, the processing unit 7100 is configured to generate system information carried by the first PBCH, and the transceiver unit 7200 is configured to send the first PBCH, where a quantity of bits of the system information is less than 32.

This application further provides a computer-readable storage medium. The computer-readable storage medium stores a computer program or instructions. When the computer program or the instructions are run, the method performed by the network device or the terminal device in the foregoing method embodiments is implemented. In this way, the functions in the foregoing embodiments may be implemented in a form of a software functional unit and sold or used as an independent product. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes: any medium that can store program code, such as a USB flash drive, a removable hard disk, a read-only memory ROM, a random access memory RAM, a magnetic disk, or an optical disc.

This application further provides a computer program product. The computer program product includes computer program code. When the computer program code is run on a computer, the computer is enabled to perform the method performed by the terminal device or the network device in any one of the foregoing method embodiments.

This application further provides a system, including a terminal device and a network device.

An embodiment of this application further provides a processing apparatus, including a processor and an interface. The processor is configured to perform the method performed by the terminal device or the network device in any one of the foregoing method embodiments.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the unit division is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, to be specific, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disk, SSD)), or the like.

It should be understood that an "embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" mentioned in embodiments of this application are intended to distinguish between a plurality of objects, and are not intended to limit sizes, content, a sequence, a time sequence, priorities, or importance degrees, or the like of the plurality of objects. For example, the first PDSCH and the second PDSCH may be a same physical channel, or may be different physical channels. In addition, this name does not indicate that the two physical channels are different in information amounts, content, priorities, importance degrees, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more. "At least one item (piece) of the following" or a similar expression thereof means any combination of these items, including any combination of singular items (pieces) or plural items (pieces). For example, at least one of a, b, or c may represent a, b, c, a and b, a and c, b and c, or a, b, and c.

It should be further understood that, unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It should be further understood that the term "and/or" in this specification describes only an association relationship between associated objects and represents that three relationships may exist. For example, A and/or B may represent the following three cases: only A exists, both A and B exist, and only B exists. A and B may be singular or plural. A character "/" usually represents an "or" relationship between the associated objects. For example, A/B indicates A or B.

It should be further understood that in embodiments of this application, "B corresponding to A" indicates that B is associated with A, and B may be determined based on A. However, it should further be understood that determining B based on A does not mean that B is determined based only on A, and B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining a first physical resource, wherein the first physical resource is a physical resource occupied by a first physical broadcast channel PBCH and a first PBCH demodulation reference signal DMRS in a first SSB; and
   receiving the first PBCH and the first PBCH DMRS on the first physical resource, wherein
   the first SSB occupies four symbols in time domain and occupies X subcarriers in frequency domain, wherein X is a positive integer greater than 127 and less than 240.

2. The method according to claim 1, wherein the first physical resource comprises:

   all resource elements REs in a 2nd symbol and a 4th symbol in the four symbols; and
   Y REs in a 3rd symbol in the four symbols, wherein Y is a positive integer less than 96.

3. The method according to claim 1 or 2, wherein X is 144, 150, 180, 192, or 216.

4. The method according to any one of claims 1 to 3, wherein the determining a first physical resource comprises:

   determining the first physical resource based on a first frequency domain pattern, wherein the first frequency domain pattern is a part of patterns comprised in a second frequency domain pattern; and
   the second frequency domain pattern is a frequency domain resource pattern in a second resource area, and the second resource area occupies four consecutive symbols in time domain and occupies 240 consecutive subcarriers in frequency domain.

5. The method according to claim 4, wherein the second frequency domain pattern comprises:

in a 2nd symbol and a 4th symbol in the second resource area, a frequency domain resource is the 240 subcarriers; and
in a 3rd symbol in the second resource area, a frequency domain resource is the first 48 subcarriers and the last 48 subcarriers in the 240 subcarriers.

6. The method according to claim 5, wherein the first frequency domain pattern is a pattern of the second frequency domain pattern in a first resource area, the first resource area is a resource area occupied by the first SSB, the four symbols occupied by the first SSB in time domain are the four consecutive symbols, and the X subcarriers occupied by the first SSB in frequency domain are a part of subcarriers comprised in the 240 subcarriers.

7. The method according to claim 6, wherein the X subcarriers are the first X subcarriers, the last X subcarriers, or the middle X subcarriers in the 240 subcarriers.

8. The method according to any one of claims 4 to 7, wherein coded bits of the first PBCH are determined based on the first frequency domain pattern.

9. The method according to any one of claims 4 to 7, wherein coded bits of the first PBCH are determined based on the second frequency domain pattern.

10. The method according to claim 9, wherein after the receiving the first PBCH, the method further comprises:

   determining a second physical resource based on the first frequency domain pattern, wherein the second physical resource is a physical resource occupied by a second PBCH and a second PBCH DMRS in a second SSB, and the second physical resource and the first physical resource are located in different time domain resources; and
   receiving the second PBCH and the second PBCH DMRS on the second physical resource, wherein
   the first PBCH is sequentially mapped in ascending order of subcarrier indexes, and the second PBCH is sequentially mapped in descending order of subcarrier indexes.

11. The method according to claim 9, wherein after the receiving the first PBCH, the method further comprises:

   determining a second physical resource based on a third frequency domain pattern, wherein the second physical resource is a physical resource occupied by a second PBCH and a second PBCH DMRS in a second SSB, and the second physical resource and the first physical resource are located in different time domain resources; and
   receiving the second PBCH and the second PBCH DMRS on the second physical resource, wherein
   the third frequency domain pattern is a part of patterns comprised in the second frequency domain pattern, and a frequency domain resource comprised in the third frequency domain pattern and a frequency domain resource comprised in the first frequency domain pattern partially overlap or do not overlap at all.

12. The method according to any one of claims 1 to 11, wherein after the receiving the first PBCH, the method further comprises:
obtaining system information carried by the first PBCH, wherein a quantity of bits of the system information is less than 32.

13. The method according to claim 10 or 11, wherein after receiving the first PBCH and the second PBCH, the method further comprises:
obtaining system information based on the first PBCH and the second PBCH, wherein a quantity of bits of the system information is less than 32.

14. The method according to claim 12 or 13, wherein

   the system information does not comprise common subcarrier spacing information;
   a quantity of bits of physical downlink control channel configuration information comprised in the system information is less than 8; or
   a quantity of bits of physical layer information comprised in the system information is less than 8.

15. A communication method, comprising:

mapping a first PBCH and a first PBCH DMRS to a first physical resource, wherein the first physical resource is a physical resource occupied by the first PBCH and the first PBCH DMRS in a first SSB; and

sending the first PBCH and the first PBCH DMRS, wherein the first PBCH is located in the first physical resource; and

the first SSB occupies four symbols in time domain and occupies X subcarriers in frequency domain, wherein X is a positive integer greater than 127 and less than 240.

16. The method according to claim 15, wherein the first physical resource comprises:

all resource elements REs in a $2^{nd}$ symbol and a $4^{th}$ symbol in the four symbols; and

Y REs in a $3^{rd}$ symbol in the four symbols, wherein Y is a positive integer less than 96.

17. The method according to claim 15 or 16, wherein X is 144, 150, 180, 192, or 216.

18. The method according to any one of claims 15 to 17, wherein the mapping a first PBCH and a first PBCH DMRS to a first physical resource comprises:

mapping the first PBCH and the first PBCH DMRS to the first physical resource based on a first frequency domain pattern, wherein the first frequency domain pattern is a part of patterns comprised in a second frequency domain pattern; and

the second frequency domain pattern is a frequency domain resource pattern in a second resource area, and the second resource area occupies four consecutive symbols in time domain and occupies 240 consecutive subcarriers in frequency domain.

19. The method according to claim 18, wherein the second frequency domain pattern comprises:

in a $2^{nd}$ symbol and a $4^{th}$ symbol in the second resource area, a frequency domain resource is the 240 subcarriers; and

in a $3^{rd}$ symbol in the second resource area, the frequency domain resource is the first 48 subcarriers and the last 48 subcarriers in the 240 subcarriers.

20. The method according to claim 18 or 19, wherein before the mapping a first PBCH and a first PBCH DMRS to a first physical resource, the method further comprises:
coding, based on the first frequency domain pattern, system information carried by the first PBCH.

21. The method according to claim 18 or 19, wherein before the mapping a first PBCH and a first PBCH DMRS to a first physical resource, the method further comprises:
coding, based on the second frequency domain pattern, system information carried by the first PBCH.

22. The method according to claim 21, wherein after the sending the first PBCH and the first PBCH DMRS, the method further comprises:

mapping a second PBCH and a second PBCH DMRS to a second physical resource based on the first frequency domain pattern, wherein the second physical resource and the first physical resource are located in different time domain resources; and

sending the second PBCH and the second PBCH DMRS on the second physical resource, wherein the first PBCH is sequentially mapped in ascending order of subcarrier indexes, and the second PBCH is sequentially mapped in descending order of subcarrier indexes.

23. The method according to claim 21, wherein after the sending the first PBCH and the first PBCH DMRS, the method further comprises:

mapping a second PBCH and a second PBCH DMRS to a second physical resource based on a third frequency domain pattern, wherein the second physical resource and the first physical resource are located in different time domain resources; and

sending the second PBCH and the second PBCH DMRS on the second physical resource, wherein the third frequency domain pattern is a part of patterns comprised in the second frequency domain pattern, and a frequency domain resource comprised in the third frequency domain pattern and a frequency domain resource comprised in the first frequency domain pattern partially overlap or do not overlap at all.

24. The method according to any one of claims 15 to 23, wherein before the mapping a first PBCH to a first physical resource, the method further comprises:
generating system information carried by the first PBCH, wherein a quantity of bits of the system information is less than 32.

25. The method according to claim 24, wherein

the system information does not comprise common subcarrier spacing information;
a quantity of bits of physical downlink control channel configuration information comprised in the system information is less than 8; or
a quantity of bits of physical layer information comprised in the system information is less than 8.

26. A communication apparatus, wherein the communication apparatus comprises a processor and a memory, the memory is configured to store a computer program or instructions, and the processor is configured to execute the computer program or the instructions in the memory, to perform the method according to any one of claims 1 to 14.

27. A communication apparatus, wherein the communication apparatus comprises a processor and a memory, the memory is configured to store a computer program or instructions, and the processor is configured to execute the computer program or the instructions in the memory, to perform the method according to any one of claims 15 to 25.

28. A computer-readable storage medium, wherein the computer-readable storage medium stores a computer program or instructions, and the computer program or the instructions are used to implement the method according to any one of claims 1 to 14.

29. A computer-readable storage medium, wherein the computer-readable storage medium stores a computer program or instructions, and the computer program or the instructions are used to implement the method according to any one of claims 15 to 25.

30. A computer program product, wherein the computer program product comprises computer program code, and when the computer program code is run by a computer, the computer is enabled to perform the method according to any one of claims 1 to 14, or the method according to any one of claims 15 to 25.

FIG. 1

FIG. 2

One synchronization signal burst set

5 ms

SSB #0      SSB #1      SSB #L      SSB #0

| | | PBCH | | | | PBCH | | | | PBCH | | | | PBCH | |
| ... | PSS | PBCH | SSS | PBCH | PSS | PBCH | SSS | PBCH | ... | PSS | PBCH | SSS | PBCH | ... | PSS | PBCH | SSS | PBCH |
| | | PBCH | | | | PBCH | | | | PBCH | | | | PBCH | |

TO FIG. 3B

Periodicity (20 ms) of the synchronization signal burst set

FIG. 3A

SSB #1      SSB #L

CONT. FROM FIG. 3A

| | | PBCH | | | | PBCH | |
| PSS | PBCH | SSS | PBCH | ... | PSS | PBCH | SSS | PBCH |
| | | PBCH | | | | PBCH | |

SSB #3

SSB #2

SSB #1

FIG. 3B

FIG. 4A

FIG. 4B

FIG. 4C

FIG. 4D

Frequency domain
(subcarrier)

First SSB

Second SSB

| First PSS | First PBCH | First SSS | First PBCH |

| Second PSS | Second PBCH | Second PSS | Second PBCH |

Time domain
(symbol)

First time domain resource

Second time domain resource

FIG. 5A

Frequency domain
(subcarrier)

First SSB

Second SSB

| First<br>PSS | First<br>PBCH | First<br>SSS | First<br>PBCH | | Second<br>PSS | Second<br>PBCH | Second<br>PSS | Second<br>PBCH |

Time domain
(symbol)

First time domain resource

Second time domain resource

FIG. 5B

FIG. 5C

```
┌─────────────────┐                    ┌─────────────────┐
│                 │                    │                 │
│  Network device │                    │ Terminal device │
│                 │                    │                 │
└────────┬────────┘                    └────────┬────────┘
         │                                      │
┌ ─ ─ ─ ─┴─ ─ ─ ─ ─ ─ ─ ─ ─ ─ ─ ─ ┐            │
│ S610: Generate system information │            │
│ carried by a first PBCH           │            │
└ ─ ─ ─ ─┬─ ─ ─ ─ ─ ─ ─ ─ ─ ─ ─ ─ ─┘            │
┌ ─ ─ ─ ─┴─ ─ ─ ─ ─ ─ ─ ─ ─ ─ ─ ─ ┐            │
│ S620: Code the system information │            │
│ carried by the first PBCH         │            │
└ ─ ─ ─ ─┬─ ─ ─ ─ ─ ─ ─ ─ ─ ─ ─ ─ ─┘            │
┌────────┴────────────────────────┐   ┌─────────┴──────────┐
│ S630: Map the first PBCH to a    │  │ S640: Determine the │
│ first physical resource          │  │ first physical      │
│                                  │   │ resource            │
└────────┬────────────────────────┘   └─────────┬──────────┘
         │          S650: First PBCH            │
         │ ──────────────────────────────────► │
         │                                      │
         │              ┌ ─ ─ ─ ─ ─ ─ ─ ─ ─ ─ ─┴─ ─ ─ ─ ─ ─ ┐
         │              │ S660: Obtain the system information │
         │              │ carried by the first PBCH           │
         │              └ ─ ─ ─ ─ ─ ─ ─ ─ ─ ─ ─┬─ ─ ─ ─ ─ ─ ─┘
         │                                      │
```

FIG. 6

FIG. 7

FIG. 8A

Frequency domain
(subcarrier)

Puncture

Puncture

| First PSS | First PBCH | First SSS | First PBCH |

| Second PSS | Second PBCH | Second PSS | Second PBCH |

Time domain
(symbol)

First time domain resource

Second time domain resource

FIG. 8B

FIG. 8C

Network device

Terminal device

S910: Generate system information

S920: Code the system information

S930: Map a first PBCH and a first PBCH DMRS to a first physical resource

S940: Determine the first physical resource

S950: First PBCH and first PBCH DMRS

S960: Map a second PBCH and a second PBCH DMRS to a second physical resource

S970: Determine the second physical resource

S980: Second PBCH and second PBCH DMRS

S990: Obtain the system information

FIG. 9

1000

1100                    1200

| Processor | | Memory |
| Instructions | | Instructions |

1300                    1400

| Transceiver | Antenna |

1500                    1600

FIG. 10

Radio access
network

| Terminal device | | Modulation symbol of a first PBCH | | System information | |
|---|---|---|---|---|---|
| | First PBCH | 3000a | first PBCH | 3000b | 3000c |

FIG. 11

5200

| Antenna 5202 |
| Radio frequency unit 5201 |

5000

5100

| Memory 5102 |
| Processor 5101 |

FIG. 12

6700

Antenna
6400

Radio frequency circuit
6300

Memory
6200

Processor
6100

6600

Input/Output apparatus
6500

6000

FIG. 13

7000

Processing
unit 7100

Transceiver
unit 7200

FIG. 14

## INTERNATIONAL SEARCH REPORT

| | |
|---|---|
| International application No. |
| **PCT/CN2022/110478** |

**A.  CLASSIFICATION OF SUBJECT MATTER**

H04W 24/02(2009.01)i

According to International Patent Classification (IPC) or to both national classification and IPC

**B.  FIELDS SEARCHED**

Minimum documentation searched (classification system followed by classification symbols)

H04L,H04W

Documentation searched other than minimum documentation to the extent that such documents are included in the fields searched

Electronic data base consulted during the international search (name of data base and, where practicable, search terms used)

CNPAT, WPI, EPODOC, 3GPP: 窄带, 同步信号块, 同步块, 小, 少, 低 , 短, 子载波, 240, 20, RB, 144, 150, 180, 192, 216, PBCH, narrow bandwidth, ss block, synchronization signal block, less, little, small, low, subcarrier

**C.  DOCUMENTS CONSIDERED TO BE RELEVANT**

| Category* | Citation of document, with indication, where appropriate, of the relevant passages | Relevant to claim No. |
|---|---|---|
| X | WO 2020194240 A1 (TELEFONAKTIEBOLAGET LM ERICSSON (PUBL)) 01 October 2020 (2020-10-01) claims 1-16, and description, paragraphs 91-94 and 105-111, and figure 9 | 1-30 |
| X | CN 111465091 A (HUAWEI TECHNOLOGIES CO., LTD.) 28 July 2020 (2020-07-28) claims 1-34, and description, paragraphs 136-139 and 200-203 | 1-30 |
| X | SIERRA WIRELESS. "NR PBCH Design Consideration" *3GPP TSG RAN WG1 Meeting #89 R1- 1708362,* 19 May 2017 (2017-05-19), chapter 2 | 1-30 |
| X | CN 111464274 A (HUAWEI TECHNOLOGIES CO., LTD.) 28 July 2020 (2020-07-28) claims 1-31, and description, paragraphs 172-242 | 1-30 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T"  later document published after the international filing date or priority date and not in conflict with the application but cited to understand the principle or theory underlying the invention |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **09 September 2022** | **28 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

International application No.

**PCT/CN2022/110478**

| Patent document cited in search report | | | Publication date (day/month/year) | Patent family member(s) | | | Publication date (day/month/year) |
|---|---|---|---|---|---|---|---|
| WO | 2020194240 | A1 | 01 October 2020 | EP | 3949224 | A1 | 09 February 2022 |
| | | | | US | 2022166569 | A1 | 26 May 2022 |
| CN | 111465091 | A | 28 July 2020 | US | 2021345269 | A1 | 04 November 2021 |
| | | | | EP | 3905799 | A1 | 03 November 2021 |
| | | | | WO | 2020147728 | A1 | 23 July 2020 |
| CN | 111464274 | A | 28 July 2020 | EP | 3905575 | A1 | 03 November 2021 |
| | | | | WO | 2020147731 | A1 | 23 July 2020 |
| | | | | US | 2021345312 | A1 | 04 November 2021 |
| | | | | IN | 202127031506 | A | 18 March 2022 |

Form PCT/ISA/210 (patent family annex) (January 2015)

**EP 4 376 473 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202110919675